(19) Europäisches Patentamt
European Patent Office
Office européen des brevets

(11) EP 3 478 428 B1

(12) # EUROPÄISCHE PATENTSCHRIFT

(45) Veröffentlichungstag und Bekanntmachung des Hinweises auf die Patenterteilung:
**17.02.2021 Patentblatt 2021/07**

(21) Anmeldenummer: **17736599.6**

(22) Anmeldetag: **28.06.2017**

(51) Int Cl.:
***B22C 1/16*** (2006.01) ***B22C 1/22*** (2006.01)
***B22C 9/12*** (2006.01) ***B22C 1/18*** (2006.01)
***C08L 61/14*** (2006.01) ***C08K 3/38*** (2006.01)
***C08K 5/5435*** (2006.01)

(86) Internationale Anmeldenummer:
**PCT/EP2017/065967**

(87) Internationale Veröffentlichungsnummer:
**WO 2018/002121 (04.01.2018 Gazette 2018/01)**

(54) **WÄSSRIGE ALKALISCHE BINDEMITTELZUSAMMENSETZUNG ZUR AUSHÄRTUNG MIT KOHLENDIOXIDGAS SOWIE DEREN VERWENDUNG, EINE ENTSPRECHENDE FORMSTOFFMISCHUNG ZUR HERSTELLUNG EINES GIESSEREIFORMKÖRPERS, EIN ENTSPRECHENDER GIESSEREIFORMKÖRPER SOWIE EIN VERFAHREN ZUR HERSTELLUNG EINES GIESSEREIFORMKÖRPERS**

AQUEOUS ALKALINE BINDER COMPOSITION FOR CURING WITH CARBON DIOXIDE GAS AND USE THEREOF, A CORRESPONDING MOULDING MIXTURE FOR PRODUCING FOUNDRY SHAPE, A CORRESPONDING FOUNDRY SHAPE AND A METHOD FOR PRODUCING A FOUNDRY SHAPE

COMPOSITION ALCALINE AQUEUSE COMME LIANT, À DURCISSEMENT AU DIOXYDE DE CARBONE, SON UTILISATION, MÉLANGE DE MATIÈRES MOULABLES CORRESPONDANT POUR LA FABRICATION D'UN CORPS MOULÉ DE FONDERIE, CORPS MOULÉ DE FONDERIE CORRESPONDANT ET PROCÉDÉ DE FABRICATION D'UN CORPS MOULÉ DE FONDERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2016 DE 102016211970**

(43) Veröffentlichungstag der Anmeldung:
**08.05.2019 Patentblatt 2019/19**

(73) Patentinhaber: **HÜTTENES-ALBERTUS Chemische Werke Gesellschaft mit beschränkter Haftung**
**40549 Düsseldorf (DE)**

(72) Erfinder:
- **LADÉGOURDIE, Gérard**
  **40237 Düsseldorf (DE)**
- **EGELER, Nicolas**
  **47803 Krefeld (DE)**

(74) Vertreter: **Eisenführ Speiser**
**Patentanwälte Rechtsanwälte PartGmbB**
**Am Kaffee-Quartier 3**
**28217 Bremen (DE)**

(56) Entgegenhaltungen:
**GB-A- 886 854** **JP-A- 2000 024 751**
**US-A- 4 474 904** **US-A- 4 780 489**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 478 428 B1

## Beschreibung

Die vorliegende Erfindung betrifft eine wässrige alkalische Bindemittelzusammensetzung zur Aushärtung mit Kohlendioxidgas, die Verwendung der wässrigen alkalischen Bindemittelzusammensetzung, eine Formstoffmischung zur Herstellung eines Gießereiformkörpers sowie ein entsprechendes Verfahren zur Herstellung eines Gießereiformkörpers und einen entsprechenden Gießereiformkörper.

Die Erfindung wird in den Ansprüchen definiert, und nachfolgend sind spezifische Aspekte der Erfindung definiert und beschrieben.

In der Gießereiindustrie gibt es drei wesentliche Typen von Gießereiformkörpern. Kerne und Formen sind Gießereiformkörper, welche in der Regel in Kombination miteinander die Negativform eines herzustellenden Gussstückes darstellen. Speiserelemente bilden Hohlkörper, welche als Ausgleichsreservoir dazu dienen, Lunkerbildungen zu vermeiden. Diese Gießereiformkörper umfassen dabei regelmäßig einen Formgrundstoff, beispielsweise Quarzsand oder ein anderes feuerfestes Material, oder eine entsprechende Formstoffmischung und ein geeignetes Bindemittel, das dem Gießereiformkörper nach der Entnahme aus dem Formwerkzeug eine ausreichende mechanische Festigkeit verleiht. Eine Formstoffmischung liegt dabei üblicherweise und bevorzugt in einer rieselfähigen Form vor, sodass sie in eine geeignete Hohlform eingefüllt und dort verdichtet werden kann. Durch zugesetztes Bindemittel wird ein fester Zusammenhalt zwischen den Partikeln des Formgrundstoffs erzeugt, sodass der entstehende Gießereiformkörper die erforderliche mechanische Stabilität erhält. Die Gießereiformkörper selbst müssen dabei verschiedene Anforderungen erfüllen, wie zum Beispiel eine ausreichend hohe Festigkeit.

Insbesondere treten in der Gießereiindustrie häufig Probleme bei sehr filigranen Gießereiformkörpern auf, da diese eine besonders hohe Festigkeit (d.h. Stabilität) voraussetzen, damit eine ausreichend große Stabilität beim Gießen vorhanden ist. Dies gilt insbesondere für frisch gehärtete Gießereiformkörper.

Aus dem Stand der Technik sind folgende Dokumente bekannt:

DE 10 2005 024 334 A1 befasst sich mit "Cold-Box Bindemittelsystem unter Verwendung von gesättigten Fettsäureestern" (Bezeichnung).

EP 0 363 385 B1 betrifft "Modifizierungsmittel für wässrige basische Lösungen von Phenolharzen" (Titel).

WO 03/016400 A1 betrifft ein "$CO_2$-härtbares Bindemittelsystem auf Resolbasis" (Bezeichnung).

EP 0 323 096 B1 betrifft die "Production of articles of bonded particulate material and binder compositions for use therein" (Titel). Die Bindemittel-Kompositionen enthalten 0,2 bis 1,0 Gew.-% eines Silans, wie z.B. γ- Aminopropyltriethoxysilan.

WO 97/18913 betrifft einen "Cold-box process for preparing foundry shapes" (Titel). Das bindemittelsystem enthält 0,1 bis 2,0 Gew.-% eines Silans (s. S. 10, Z. 14).

US 5,242,957 A betrifft "Alkaline resol phenol-aldehyde resin binder compositions containing phenyl ethylene glycol ether" (Titel). Die Bindemittel-Kompositionen enthalten 0,2 bis 1,0 Gew.-% eines Silans, wie z.B. γ- Aminopropyltriethoxysilan (vgl. Spalte 2, Zeile 18 bis 23).

US 5,198,478 A betrifft "Alkaline resol phenol-aldehyde resin binder compositions" (title). Die Bindemittel-Kompositionen enthalten 0,2 bis 1,0 Gew.-% eines Silans, wie z.B. γ-Aminopropyltriethoxysilan (vgl. Spalte 2, Zeile 18 bis 23).

WO 01/12709 A1 betrifft ein "Aluminium- und borhaltiges Bindemittelsystem auf Resolbasis" (Titel).

US 5,294,648 A betrifft eine "Alkaline resol phenol-aldehyde resin binder composition" (Titel). Die Bindemittel-Kompositionen enthalten 0,2 bis 1,0 Gew.-% eines Silans, wie z.B. γ- Aminopropyltriethoxysilan (vgl. Spalte 2, Zeile 26 bis 32).

EP 2 052 798 A1 betrifft "Alkaline resol phenol-aldehyde resin binder compositions" (Titel).

EP 0 503 758 B1 betrifft ein "Bindemittel aus alkalischen Phenolaldehyd-Resolharzen" (Titel). Die Bindemittel-Kompositionen enthalten 0,2 bis 1,0 Gew.-% eines Silans, wie z.B. γ- Aminopropyltriethoxysilan (vgl Seite 2, Zeile 48 bis 51).

US 4,977,209 A betrifft die "Production of articles of bonded particulate material and binder compositions for use

therein from phenol-formaldehyde and oxyanion" (Titel). Die Bindemittel-Kompositionen enthalten 0,2 bis 1,0 Gew.-% eines Silans, wie z.B. γ- Aminopropyltriethoxysilan.

GB 2 253 627 A betrifft "Alkaline resol phenol-aldehyde resin binder compositions" (Titel). Die Bindemittel-Kompositionen enthalten 0,25 bis 1,0 Gew.-% eines Silans, wie z.B. γ-Aminopropyltriethoxysilan (s. Anspruch 7).

US 5,162,393 betrifft die "Production of foundry sand moulds and cores" (Titel).

US 4,985,489 betrifft die "Production of articles of bonded particulate material and binder compositions for use therein" (Titel). Die Bindemittel-Kompositionen enthalten 0,2 bis 1,0 Gew.-% eines Silans, wie z.B. γ- Aminopropyltriethoxysilan.

EP 2 052 798 B1 betrifft eine "Bindemittelzusammensetzung aus alkalischen Phenolaldehyd-Resolharzen" (Titel).

EP 0 508 566 B1 betrifft "Alkaline resol phenol-aldehyde resin binder compositions" (Titel). Die Bindemittel-Kompositionen enthalten 0,2 bis 1,0 Gew.-% eines Silans (siehe Anspruch 7), wie z.B. gamma-Aminopropyltriethoxysilan, N-(2-aminoethyl)-3-aminopropyltrimethoxysilan, Phenyltrimethoxysilan oder gamma-Glycidoxypropyltrimethoxysilan (siehe Anspruch 6).

EP 0 503 759 B1 betrifft "Alkaline resol phenol-aldehyde resin binder compositions" (Titel).

EP 0 556 955 B1 betrifft ein "Alkalisches Resol-Phenol-Aldehyd-Harz-Bindemittel" (Titel).

JP 2000 024 751 A betrifft eine Bindemittelzusammensetzung zur Härtung mit Kohlendioxidgas.

GB 886,854 betrifft ein Kernbindersystem bestehend aus einer Trockenmischung von wärmehärtbarem Melaminharz, Stärke und einem wasserlöslichen Celluloseester.

US 4,474,904 betrifft eine Gießereiformmasse umfassend

(a) ein körniges feuerfestes Material;

(b) von 0,25 bis 2,5%, bezogen auf das Gewicht des feuerfesten Materials, einer wässrigen Lösung eines Kalium-alkalischen Phenol-Formaldehyd-Harzes, wobei diese wässrige Lösung einen Feststoffgehalt von 50 bis 75 Gew.% aufweist, das Harz ein durchschnittliches molekulares Gewichtsmittel (Mw) von 700 bis 2.000 besitzt, das molare Verhältnis von Formaldehyd:Phenol 1,2:1 bis 2,6:1 und das molare Verhältnis von KOH:Phenol von 0,5:1 bis 1,2:1 geht;

(c) mindestens ein Silan in einer Menge von 0,05 bis 3 Gew.%, bezogen auf das Gewicht der Harzlösung; und

(d) als Härter mindestens einen Ester in einer Menge von 20 bis 110 Gew. %, bezogen auf das Gewicht der Harzlösung.

Es war eine primäre Aufgabe der vorliegenden Erfindung, eine wässrige alkalische Bindemittelzusammensetzung zur Aushärtung mit Kohlendioxidgas bereitzustellen, mit der besonders stabile Gießereiformkörper (d.h. Gießereiformkörper mit einer besonders hohen Festigkeit), insbesondere besonders stabile geschlichtete Gießereiformkörper, hergestellt werden können.

Vorzugsweise sollten gemäß spezifischen Aspekten ein oder mehr weitere Aufgaben gelöst werden:
Gemäß einem spezifischen Aspekt war es eine Aufgabe der vorliegenden Erfindung, eine wässrige alkalische Bindemittelzusammensetzung zur Aushärtung mit Kohlendioxidgas bereitzustellen, mit der Gießereiformkörper hergestellt werden können, welche im Vergleich eine besonders hohe Festigkeit sowohl nach kurzer Lagerzeit (zum Beispiel nach 1 Stunde), als auch nach langen Lagerzeiten (von 24 Stunden oder länger, auch bei hohen Luftfeuchtigkeiten) bei üblichen Lagerungsbedingungen aufweisen. Eine besonders hohe Festigkeit sollte vorzugsweise auch nach dem Schlichten mit üblichen Wasserschlichten erhalten bleiben.

Gemäß einem weiteren spezifischen Aspekt war es eine Aufgabe der vorliegenden Erfindung, eine wässrige alkalische Bindemittelzusammensetzung zur Aushärtung mit Kohlendioxidgas bereitzustellen, welche eine besonders hohe, vorzugsweise erhöhte Fließfähigkeit aufweist im Vergleich zu den aus dem Stand der Technik bekannten Bindemittelzusammensetzungen.

Gemäß einem weiteren spezifischen Aspekt war es eine Aufgabe der vorliegenden Erfindung, eine wässrige alkalische Bindemittelzusammensetzung zur Aushärtung mit Kohlendioxidgas bereitzustellen, welche in einem entsprechenden Verfahren zur Herstellung eines Gießereiformkörpers eine besonders geringe, vorzugsweise eine verringerte Geruchsemission aufweist im Vergleich zu den aus dem Stand der Technik bekannten Bindemittelzusammensetzungen.

Gemäß einem weiteren spezifischen Aspekt war es eine Aufgabe der vorliegenden Erfindung, eine wässrige alkalische Bindemittelzusammensetzung zur Aushärtung mit Kohlendioxidgas bereitzustellen, mit derer Gießereiformkörpern hergestellt werden können, welche im Vergleich zu den aus dem Stand der Technik bekannten Gießereiformkörpern eine verbesserte Oberflächenbeschaffenheit und/oder eine verbesserte Kantenhärte aufweisen.

Gemäß einem weiteren spezifischen Aspekt war es eine Aufgabe der vorliegenden Erfindung, eine wässrige alkalische Bindemittelzusammensetzung zur Aushärtung mit Kohlendioxidgas bereitzustellen, mit der Gießereiformkörper mit einer besonders hohen, vorzugsweise höheren Anfangsfestigkeit hergestellt werden können im Vergleich zu den im Stand der Technik bekannten Bindemittelzusammensetzungen.

Es war eine damit verbundene Aufgabe der vorliegenden Erfindung, eine entsprechende Verwendung einer wässrigen alkalischen Bindemittelzusammensetzung anzugeben.

Weitere Aufgaben der vorliegenden Erfindung ergeben sich, *mutatis mutandis,* aus den vorstehenden Ausführungen und ergeben sich aus den entsprechenden Erläuterungen im nachfolgenden Text.

Es war eine weitere damit verbundene Aufgabe der vorliegenden Erfindung, eine entsprechende Formstoffmischung zur Herstellung eines Gießereiformkörpers bereitzustellen, welche einen Gießereiformstoff sowie die gemäß der primären Aufgabe anzugebende wässrige alkalische Bindemittelzusammensetzung zur Aushärtung mit Kohlendioxidgas enthält.

Es war eine weitere Aufgabe der vorliegenden Erfindung, ein entsprechendes Verfahren zur Herstellung eines Gießereiformkörpers anzugeben.

Es war eine weitere Aufgabe der vorliegenden Erfindung, einen entsprechenden Gießereiformkörper anzugeben.

Weitere Aufgaben der vorliegenden Erfindung ergeben sich, *mutatis mutandis,* aus den vorstehenden Ausführungen und aus den Ausführungen im nachfolgenden Text.

Die primäre Aufgabe der vorliegenden Erfindung wird gelöst durch eine wässrige alkalische Bindemittelzusammensetzung zur Härtung mit Kohlendioxidgas, umfassend

- ein Phenolgruppen umfassendes, negativ geladenes oder ungeladenes Phenolaldehydharz, welches ausgewählt ist aus der Gruppe bestehend aus Resolen und Mischungen umfassend ein oder mehrere Resole sowie ein oder mehrere Novolake,

- ein Oxyanion, ausgewählt aus der Gruppe bestehend aus Borat-Ionen, Aluminat-Ionen, Stannat-Ionen, Zirkonat-Ionen, Titanat-Ionen und deren Mischungen, zum Ausbilden eines stabilen Komplexes mit dem Resol-Phenolaldehydharz sowie

- ein oder mehrere Silane in einer Gesamtmenge im Bereich von 2,5 bis 10 Gew.-%, bezogen auf die Gesamtmasse der Bindemittelzusammensetzung,

wobei die molare Gesamtmenge der Phenolgruppen des Phenolaldehydharzes in der wässrigen alkalischen Bindemittelzusammensetzung im Bereich von 1 bis 3 mol/kg liegt, bezogen auf die Gesamtmasse der wässrigen alkalischen Bindemittelzusammensetzung.

Im Vergleich mit aus dem Stand der Technik bekannten wässrigen alkalischen Bindemittelzusammensetzungen zur Härtung mit Kohlendioxidgas ist der Gesamtanteil an Silan in der erfindungsgemäßen Bindemittelzusammensetzung außergewöhnlich hoch. Zu den hiermit verknüpften überraschenden Eigenschaften siehe unten.

In erfindungsgemäßen wässrigen alkalischen Bindemittelzusammensetzungen ist in jedem Falle zumindest ein Resol (negativ geladen oder ungeladen) anwesend, ein oder mehrere Novolake (negativ geladen oder ungeladen) können zusätzlich vorhanden sein.

Negativ geladenes Resol bzw. negativ geladenes Novolak liegt insbesondere dann vor, wenn Phenolgruppen in Phenolatform vorliegen.

Aus Kondensationsreaktionen von (i) Phenolen mit (ii) Aldehyden resultieren Phenolaldehydharze, die in Abhängigkeit von den Mengenverhältnissen der Edukte, den Reaktionsbedingungen und den eingesetzten Katalysatoren in zwei Produkt-Klassen eingeordnet werden, nämlich in (a) Novolake und (b) Resole:

(a) Novolake sind lösliche, schmelzbare, nicht selbsthärtende und lagerstabile phenolische Oligomere mit einem typischen Molekulargewicht im Bereich von ungefähr 500 bis 5000 g/mol. Sie fallen bei der sauer katalysierten Kondensation von Aldehyd und Phenol im Molverhältnis von 1 >1 an. Novolake sind methylolgruppenfreie Phenolharze, in denen die Phenolgruppen (auch Phenylkerne gennant) über Methylenbrücken verknüpft sind. Für die Definition von Phenolgruppen bzw. von Phenylkernen siehe unten.

(b) Resole sind Gemische von Hydroxymethylphenolen, die über Methylen- und Methylenetherbrücken verknüpft und durch alkalisch katalysierte oder durch zweiwertige Metallionen wie zum Beispiel $Zn^{2+}$ katalysierte Reaktion von Aldehyd und Phenolen im Molverhältnis von 1 : <1 erhältlich sind.

Bevorzugte (ungeladene) Phenolaldehydharze zur Verwendung in erfindungsgemäßen Bindemittelzusammensetzungen sind Kondensationsprodukte von

(i) einem oder mehreren Phenol(en) der allgemeinen Formel I

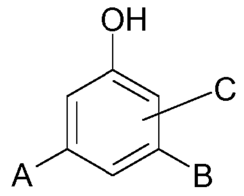

Formel I

in der A, B und C unabhängig voneinander (d.h. ein Substituent A ist beispielsweise unabhängig von dem Substituent B und dem Substituent C definiert als auch unabhängig von den Substituenten A eines anderen vorliegenden Phenols der Formel I definiert) Wasserstoff, ungesättigte oder gesättigte aliphatische Gruppen mit maximal 16 C-Atomen bedeuten, wobei die aliphatischen Gruppen vorzugsweise Alkylgruppen sind, die bevorzugt ausgewählt sind aus der Gruppe bestehend aus Methyl, Ethyl, *n*-Propyl, *i*-Propyl, *n*-Butyl, *i*-Butyl, *tert*-Butyl, Octyl und Nonyl, oder olefinische Gruppen sind,

(ii) mit einem oder mehreren Aldehyd(en) der allgemeinen Formel R'CHO, in der R' ein Wasserstoffatom oder eine Alkylgruppe mit einer Alkylhauptkettenlänge von 1-8 Kohlenstoffatomen ist.

Beispiele geeigneter Phenole, welche unter die Formel I fallen, sind Phenol ($C_6H_5OH$), o-Kresol, m-Kresol, p-Kresol, p-Butylphenol, p-Octylphenol, p-Nonylphenol und Cardanol (Bezeichung für Verbindungen der Formel I, wobei B eine aliphatische, unverzweigte Gruppe mit 15 C-Atomen und 0, 1, 2 oder 3 Doppelbindungen ist); von diesen sind Phenol ($C_6H_5OH$), o-Kresol und Cardanol bevorzugt, Phenol ($C_6H_5OH$) ist besonders bevorzugt.

Als Aldehyd ist regelmäßig Formaldehyd bevorzugt, welches auch in Form von Paraformaldehyd eingesetzt werden kann. Besonders bevorzugt wird in der Praxis (i) Formaldehyd als einziges Aldehyd eingesetzt oder (ii) Formaldehyd in Kombination mit einem oder mehr weiteren Aldehyden eingesetzt.

Bevorzugt umfasst das oder ist ein erfindungsgemäß eingesetztes Phenolaldehydharz ein Harz, in dem die Phenylkerne über ortho-para oder para-para Methylenbrücken verknüpft sind, vgl. EP 2052798 A1.

In manchen Fällen umfasst das oder ist das erfindungsgemäß eingesetzte Phenolaldehydharz ein ortho-kondensiertes phenolisches Resol, d. h. ein Phenolharz des Benzyletherharz-Typs.

Die vorstehenden Angaben zu bevorzugten Phenolen und Aldehyden sowie zu daraus resultierenden bevorzugten Phenolaldehydharzen gelten auch für die erfindungsgemäße Bindemittelzusammensetzung, die nachfolgend im Detail beschrieben ist. Die vorliegende Erfindung betrifft dabei vorzugsweise solche Phenolaldehydharze, zu deren Herstellung Formaldehyd eingesetzt wird.

Zu bevorzugten Umsetzungen und Kondensationsprodukten von (i) Phenolen der angegebenen allgemeinen Formel I mit (ii) Aldehyden (insbesondere Formaldehyd) sei auf EP 2052798 A1 verwiesen.

Ungeladene Phenolaldehydharze können in Gegenwart starker Basen unter Abgabe von Protonen in entsprechende, negativ geladene Phenolaldehydharze überführt werden. Die vorstehenden Ausführungen zu bevorzugten ungeladenen Phenolaldehydharze gelten entsprechend für die negativ geladenen Phenolaldehydharze.

In einer erfindungsgemäßen wässrigen alkalischen Bindemittelzusammensetzung liegen vorzugsweise negativ geladene Phenolaldehydharze vor, gegebenenfalls in Mischung mit ungeladenem Phenolaldehydharz.

Ein negativ geladenes oder ungeladenes Phenolaldehydharz umfasst im Rahmen der vorliegenden Erfindung phenolische Oligomere bzw. phenolische Polymere (s.o.), welche u.a. Phenolgruppen bzw. Phenylkerne enthalten. Strukturell betrachtet ist eine Phenolgruppe bzw. ein Phenylkern im Rahmen der vorliegenden Erfindung dabei eine strukturelle Moleküleinheit des Phenolaldehydharzes, welche genau ein aromatisches, nach der Hückel-Regel konjugiertes Ringsystem mit 6 delokalisierten Elektronen enthält. Formel VII zeigt schematisch eine solche Moleküleinheit, wobei R1 bis R6 nicht zur Phenolgruppe bzw. zum Phenylkern gehören, sondern Substituenten an der Phenolgruppe bzw. am Phenylkern repräsentieren.

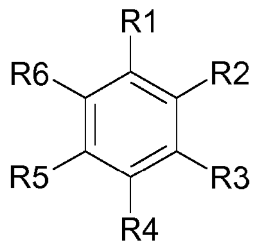

Formel VII

Oxyanionen sind im Rahmen der vorliegenden Erfindung vorzugsweise Verbindungen der Formel $M_xO_y^{-z}$,

wobei M ausgewählt ist aus der Gruppe bestehend aus B, Al, Sn, Zr und Ti
und

wobei x bzw. y bzw. z je nach Art des Elements M eine ganzzahlige Zahl im Bereich von 1 bis 4 ist.

Borat-Ionen und Aluminat-Ionen sind bevorzugte Oxyanionen zur Verwendung in erfindungsgemäßen Bindemittelzusammensetzungen, insbesondere bevorzugt sind Kombinationen von Borat und Aluminat.

In manchen Fällen ist eine erfindungsgemäße Bindemittelzusammensetzung zur Härtung mit Kohlendioxidgas (wie vorstehend definiert) bevorzugt, umfassend

- ein Phenolgruppen umfassendes, negativ geladenes oder ungeladenes Phenolaldehydharz, welches ausgewählt ist aus der Gruppe bestehend aus Resolen und Mischungen umfassend ein oder mehrere Resole sowie ein oder mehrere Novolake,

- ein Oxyanion, ausgewählt aus der Gruppe bestehend aus Aluminat-Ionen, Stannat-Ionen, Zirkonat-Ionen, Titanat-Ionen und deren Mischungen, zum Ausbilden eines stabilen Komplexes mit dem Resol-Phenolaldehydharz sowie

- ein oder mehrere Silane in einer Gesamtmenge im Bereich von 2,5 bis 10 Gew.-%, bezogen auf die Gesamtmasse der Bindemittelzusammensetzung,

wobei die molare Gesamtmenge der Phenolgruppen des Phenolaldehydharzes in der wässrigen alkalischen Bindemittelzusammensetzung im Bereich von 1 bis 3 mol/kg liegt, bezogen auf die Gesamtmasse der wässrigen alkalischen Bindemittelzusammensetzung,
und
wobei die Bindemittelzusammensetzung vorzugsweise weniger als 1 Gew.-% Borat-Ionen enthält, bevorzugt weniger als 0,1 Gew.-%, besonders bevorzugt weniger als 0,05 Gew.-%, jeweils bezogen auf die Gesamtmasse der wässrigen alkalischen Bindemittelzusammensetzung, und ganz besonders bevorzugt gar keine Borat-Ionen enthält.

Gemäß Verordnung 1272/2008 EG werden verschiedene Bor-Verbindungen als toxikologisch bedenklich eingestuft; im Rahmen der vorliegenden Erfindung wird daher der technisch in manchen Fällen durchaus vorteilhafte Einsatz von Bor-Verbindungen (insbesondere Boraten) vorzugsweise vermieden.

Überraschenderweise wurde im Rahmen der vorliegenden Erfindung festgestellt, dass erfindungsgemäße Bindemittelzusammensetzungen, welche Silane in einer (außergewöhnlich hohen) Gesamtmenge im Bereich von 2,5 bis 10 Gew.-%, bezogen auf die Gesamtmasse der Bindemittelzusammensetzung, umfassen, zu besonders festen und daher auch besonders stabilen Gießereiformkörpern führen. Dies ermöglicht es, besonders filigrane Gießereiformkörper herzustellen. In eigenen Untersuchungen haben sich die resultierenden Gießereiformkörper als besonders luftfeuchtigkeitsbeständig erwiesen; sie sind deshalb auch ohne Luftabschluß lange lagerbar.

Verbindungen der Formel VIII sind bevorzugte Silane zur Verwendung in einer erfindungsgemäßen wässrigen alkalischen Bindemittelzusammensetzung.

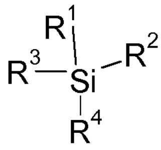

Formel VIII

In Formel VIII sind $R^1$, $R^2$, $R^3$ und $R^4$ unabhängig voneinander (d.h. ein Substituent $R^1$ ist beispielsweise unabhängig von dem Substituent $R^2$, dem Substituent $R^3$ und dem Substituent $R^4$ definiert) Wasserstoff, ungesättigte oder gesättigte aliphatische oder aromatische Gruppen mit oder ohne Substituenten; bevorzugte Substituenten sind Sauerstoff-, Chlor-, Stickstoff-, Schwefel-, Fluor-, Brom- oder Iod-Atome.

Epoxysilane sind besonders bevorzugte Silane zur Verwendung in einer erfindungsgemäßen wässrigen alkalischen Bindemittelzusammensetzung; Epoxysilane sind Verbindungen der vorstehenden Formel VIII, bei denen einer oder mehrereder Substituenten $R^1$, $R^2$, $R^3$ und $R^4$ mindestens eine Epoxy-Einheit aufweisen. Eine Epoxy-Einheit ist dabei ein Dreiring, bei dem im Vergleich zum Cyclopropan ein Kohlenstoff- durch ein Sauerstoffatom ersetzt ist.

Besonders bevorzugt sind in Formel VIII $R^1$, $R^2$, $R^3$ und $R^4$ unabhängig voneinander ausgewählt aus der Gruppe bestehend aus

- Wasserstoff,
- Alkoxyl,
- substituiertem und unsubstituiertem Alkyl,
- N-(aminoalkyl)-aminoalkyl,
- N,N-bis(aminoalkyl)-aminoalkyl,
- Alkoxyalkyl,
- Epoxyalkoxyalkyl,
- Aryl,
- Alkoxyaryl,
- Aryloxyl,
- Aralkyl
  und
- Alkaryl.

Ganz besonders bevorzugt sind $R^1$, $R^2$, $R^3$ und $R^4$ unabhängig voneinander ausgewählt aus der Gruppe bestehend aus

- Alkoxyl,
- N-(aminoalkyl)-aminoalkyl,
- N,N-bis(aminoalkyl)-aminoalkyl,
- substituiertem und unsubstituiertem Alkyl,
- Aryl,
- Alkoxyalkyl

und

- Glycidyloxyalkyl (d.h. 3-(2,3-Epoxypropoxy)alkyl).

Jeder der vorstehend definierten Substituenten $R^1$, $R^2$, $R^3$ und $R^4$ hat dabei bevorzugt eine Gesamtanzahl von C-Atomen im Bereich von 1 bis 20, besonders bevorzugt im Bereich von 1 bis 10, ganz besonders bevorzugt im Bereich von 1 bis 6.

Ganz besonders bevorzugt sind $R^1$, $R^2$, $R^3$ und $R^4$ unabhängig voneinander ausgewählt aus der Gruppe bestehend aus

- Methoxyl,
- Ethoxyl,
- 1-Methyl-ethoxyl,
- n-Propoxyl,
- 3-Aminopropyl,
- N-(2-Aminoethyl)-3-aminopropyl
  und
- 3-Glycidyloxypropyl (d.h. 3-(2,3-Epoxypropoxy)propyl).

Bevorzugt ist eine erfindungsgemäße Bindemittelzusammensetzung (wie vorstehend definiert, vorzugsweise wie vorstehend als bevorzugt definiert), umfassend

- ein oder mehrere Silane in einer Gesamtmenge im Bereich von 3,0 bis 10 Gew.-%, vorzugsweise 3,5 bis 7 Gew.-%, besonders bevorzugt 3,5 bis 6 Gew.-%, ganz besonders bevorzugt 4 bis 6 Gew.-%, bezogen auf die Gesamtmasse der Bindemittelzusammensetzung.

Überraschenderweise wurde festgestellt, dass erfindungsgemäße Bindemittelzusammensetzungen, welche die vorstehend genannten (ganz besonders hohen) Gesamtmengen an einem oder mehreren Silanen umfassen, zu einer besonders hohen Festigkeit der resultierenden Gießereiformkörper nach einer Lagerzeit von 24 Stunden bei normalen Lagerbedingungen führen. Normale Lagerbedingungen liegen zum Beispiel bei 20 °C (+/-2 °C), Atmosphärendruck und einer relativen Luftfeuchtigkeit von 47% (+/- 2 %) vor.

Besonders bevorzugt ist eine erfindungsgemäße Bindemittelzusammensetzung (wie vorstehend definiert, vorzugsweise wie vorstehend als bevorzugt definiert),
wobei ein oder mehrere oder sämtliche der eingesetzten Silane ausgewählt sind aus der Gruppe bestehend aus 3-Aminopropyltriethoxysilan, N-(2-Aminoethyl)-3-aminopropyl-trimethoxysilan und Phenyltrimethoxysilan und/oder ausgewählt sind aus der Gruppe der Epoxysilane,
und wobei ein oder mehrere der eingesetzten Silane vorzugsweise ausgewählt sind aus der Gruppe bestehend aus 3-(Glycidyloxy)propyl-triethoxysilan und 3-(Glycidyloxy)propyl-trimethoxysilan.

Vorzugsweise umfasst eine erfindungsgemäße Bindemittelzusammensetzung ausschließlich Silane, die ausgewählt sind aus der Gruppe bestehend aus 3-Aminopropyltriethoxysilan, N-(2-Aminoethyl)-3-aminopropyl-trimethoxysilan und Phenyltrimethoxysilan und/oder ausgewählt sind aus der Gruppe der Epoxysilane (vorzugsweise 3-(Glycidyloxy)propyl-triethoxysilan und 3-(Glycidyloxy)propyl-trimethoxysilan),

Ganz besonders bevorzugt ist eine erfindungsgemäße Bindemittelzusammensetzung (wie vorstehend als besonders bevorzugt definiert), als Silane umfassend

- Epoxysilane, vorzugsweise ausgewählt aus der Gruppe bestehend aus 3-(Glycidyloxy)propyl-triethoxysilan und 3-(Glycidyloxy)propyl-trimethoxysilan, in einer Gesamtmenge im Bereich von 2,5 bis 7 Gew.-%, besonders bevorzugt 4 bis 6 Gew.-%, bezogen auf die Gesamtmasse der Bindemittelzusammensetzung.

Neben Epoxysilanen können weitere sonstige Silane vorhanden oder (dies ist bevorzugt) nicht vorhanden sein.

Epoxysilane in den vorstehend genannten Konzentrationen führen im Vergleich zu anderen Silanen bei gleicher Konzentration zu einer höheren Festigkeit der resultierenden Gießereiformkörper. In eigenen Untersuchungen haben

sich die resultierenden Gießereiformkörper als ganz besonders luftfeuchtigkeitsbeständig erwiesen; sie sind deshalb auch ohne Luftabschluß besonders lange lagerbar.

Bevorzugt ist auch eine erfindungsgemäße Bindemittelzusammensetzung (wie vorstehend definiert, vorzugsweise wie vorstehend als bevorzugt definiert), wobei das negativ geladene oder ungeladene Phenolaldehydharz ein negativ geladenes oder ungeladenes Resol-Phenolaldehydharz ist, zur Härtung mit Kohlendioxidgas im Phenol-Resol-$CO_2$-Verfahren. Das Phenolaldehydharz liegt hierbei vorzugsweise als (ungeladenes) Resol-Phenolaldehydharz im alkalischen Milieu und/oder als Alkalisalz des Resol-Phenolaldehydharzes vor. Die in der Bindemittelzusammensetzung vorliegende Alkalimenge ist dabei vorzugsweise ausreichend, um eine stabile Komplexbildung zwischen dem in der Bindemittelzusammensetzung vorliegenden Harz und dem Oxyanion teilweise oder vollständig zu verhindern.

Bevorzugt ist auch eine erfindungsgemäße Bindemittelzusammensetzung (wie vorstehend definiert, vorzugsweise wie vorstehend als bevorzugt definiert), wobei das Phenolaldehydharz ein mittleres Molekulargewicht (Mw) im Bereich von 750 bis 1200 g/mol besitzt, vorzugsweise im Bereich von 750 bis 1000 g/mol,besonders bevorzugt im Bereich von 780 bis 980 g/mol und ganz besonders bevorzugt im Bereich von 850 bis 980 g/mol, bestimmt mittels Gel-Permeations-Chromatographie. Zur Bestimmungsmethode siehe unten.

Überraschenderweise hat sich im Rahmen der vorliegenden Erfindung gezeigt, dass solche Bindemittelzusammensetzungen zu besonders hohen Anfangsfestigkeiten der resultierenden Gießereiformkörper führen, bei denen das Phenolaldehydharz ein mittleres Molekulargewicht (Mw) in den vorstehend genannten Bereichen aufweist. Dies ermöglicht es, ganz besonders filigrane Gießereiformkörper herzustellen.

Vermutlich kommt es bei Anwesenheit von

einem oder mehreren Silane in einer Gesamtmenge im Bereich von 2,5 bis 10 Gew.-%, bezogen auf die Gesamtmasse der Bindemittelzusammensetzung,
und

einem Phenolaldehydharz mit einem mittleren Molekulargewicht (Mw) im Bereich von 750 bis 1200 g/mol, vorzugsweise im Bereich von 750 bis 900 g/mol und besonders bevorzugt im Bereich von 750 bis 800 g/mol, bestimmt mittels Gel-Permeations-Chromatographie,

zu einer derzeit nicht präzise spezifizierbaren Wechselwirkung zwischen den Silanen und dem Phenolaldehydharz, die für den überraschenden Effekt hinsichtlich der Festigkeiten verantwortlich sind.

Bevorzugt ist auch eine erfindungsgemäße Bindemittelzusammensetzung (wie vorstehend definiert, vorzugsweise wie vorstehend als bevorzugt definiert), zudem umfassend

- ein oder mehrere Verbindungen ausgewählt aus der Gruppe bestehend aus Polyalkylenglykole, Phenylalkylenglykolether, Propylenglykolalkylether, substituierte oder unsubstituierte Pyrrolidone, Monoethylenglykol und Polyethylenglykol in einer Gesamtmenge im Bereich von 1 bis 40 Gew.-%, vorzugsweise in einer Gesamtmenge von 1 bis 15 Gew.-%, bevorzugt im Bereich von 2 bis 4 Gew.-%, bezogen auf die Gesamtmasse der Bindemittelzusammensetzung
  und/oder
- Umsetzungsprodukte dieser Verbindung bzw. Verbindungen.

Nach Zugabe zu den weiteren Bestandteilen einer erfindungsgemäßen Bindemittelzusammensetzung reagieren die vorstehend genannten Verbindungen im Einzelfall mit weiteren Komponenten einer erfindungsgemäßen Bindemittelzusammensetzung. Sie können zum Beispiel mit Kationen (zum Beispiel Kaliumkationen), welche in der Bindemittelzusammensetzung enthalten sind, reagieren, zum Beispiel ähnlich der sogenannten Kronen-Ether-Komplexe, und/oder sie könnten mit dem Phenolaldehydharz oder den Oxyanionen zu Ethern reagieren. Die vorstehend genannten Verbindungen sind nicht ausschließlich als inerte Lösungsmittel anzusehen, sondern sie scheinen den Härtungsprozess zusätzlich zu beschleunigen. In einer erfindungsgemäßen Bindemittelzusammensetzung liegen daher -abhängig von der jeweiligen Darstellvorschrift- die Verbindungen selbst vor (noch unreagiert) und/oder deren Umsetzungsprodukte.

Das Phenolaldehydharz einer erfindungsgemäßen Bindemittelzusammensetzung ist daher vorzugsweise

(a) ein Phenolaldehydharz, welches durch Umsetzung mit den vorstehend genannten Verbindungen modifiziert wurde

(b) ein Phenolaldehydharz, welches nicht durch Umsetzung mit den vorstehend genannten Verbindungen modifiziert wurde,
oder

(c) eine Mischung von (a) und (b).

Weitere vorteilhafte Effekte, welche durch die Anwesenheit bzw. Umsetzung der vorstehend genannten Verbindungen in erfindungsgemäßen Bindemittelzusammensetzungen entstehen, sind:

(i) verbesserte Anfangsfestigkeiten der resultierenden Gießereiformkörper,

(ii) verbesserte Festigkeiten der gehärteten Gießereiformkörper nach einer bestimmten Lagerzeit, wie zum Beispiel 24 Stunden oder länger,

(iii) verbesserte Festigkeiten der resultierenden, geschlichteten Gießereiformkörper,

(iv) eine verbesserte Fließfähigkeit der Bindemittelzusammensetzung,

(v) resultierende Gießereiformkörper mit einer verbesserten Oberflächenbeschaffenheit und/oder einer verbesserten Kantenhärte,
und/oder

(vi) eine verringerte Geruchsemission, insbesondere während der Herstellung des Gießereiformkörpers oder bei der Lagerung der Gießereiformkörper.

Es ist bevorzugt, dass die vorstehend genannten Verbindungen ausgewählt aus der Gruppe bestehend aus Polyalkylenglykole, Phenylalkylenglykolether, Propylenglykolalkylether, substituierte oder unsubstituierte Pyrrolidone, Monoethylenglykol und Polyethylenglykol in einer Gesamtmenge im Bereich von 1 bis 15 Gew.-%, bevorzugt im Bereich von 2 bis 4 Gew.-%, bezogen auf die Gesamtmasse der erfindungsgemäßen Bindemittelzusammensetzung, vorliegen, da die resultierenden Gießereiformkörper verbesserte Lagerungseigenschaften und höhere Biegefestigkeiten besitzen.

Es ist besonders bevorzugt, dass in einer erfindungsgemäßen Bindemittelzusammensetzung wie vorstehend definiert die eine oder mindestens eine der mehreren Verbindungen wie vorstehend definiert ausgewählt ist aus der Gruppe der Polyethylenglykole, wobei diese in einer Gesamtmenge von 3 bis 15 Gew.-% vorliegen, bezogen auf die Gesamtmasse der Bindemittelzusammensetzung.

Besonders bevorzugt ist eine erfindungsgemäße Bindemittelzusammensetzung (wie vorstehend definiert, vorzugsweise wie vorstehend als bevorzugt definiert), zudem umfassend

- ein oder mehrere Verbindungen aus der Gruppe bestehend aus C4-C20 gesättigten oder ungesättigten aliphatischen Carbonsäuren und Alkalisalzen der besagten Säuren, in einer Gesamtmenge im Bereich von 0,1 bis 5,0 Gew.-%, vorzugsweise in einer Gesamtmenge von 0,5 bis 3 Gew.-%, vorzugsweise in einer Gesamtmenge von 0,8 bis 1,5 Gew.-%, bezogen auf die Gesamtmasse der Bindemittelzusammensetzung.

Bevorzugte oder besonders bevorzugte Bindemittelzusammensetzungen wie vorstehend definiert weisen eine verbesserte Fließfähigkeit auf im Vergleich zu erfindungsgemäßen Bindemittelzusammensetzungen, die die vorstehend definierten Verbindungen nicht enthalten.

Ganz besonders bevorzugt sind dabei solche vorstehend als besonders bevorzugt definierte erfindungsgemäße Bindemittelzusammensetzungen umfassend

- ein oder beide Verbindungen aus der Gruppe bestehend aus Isononansäure und Alkalisalzen der Isononansäure, in einer Gesamtmenge im Bereich von 0,1 bis 5,0 Gew.-%, vorzugsweise in einer Gesamtmenge von 0,5 bis 3 Gew.-%, vorzugsweise in einer Gesamtmenge von 0,8 bis 1,5 Gew.-%, bezogen auf die Gesamtmasse der Bindemittelzusammensetzung.

Ganz besonders bevorzugte erfindungsgemäße Bindemittelzusammensetzungen, welche Isononansäure und/oder Alkalisalze der Isononansäure in den vorstehend definierten Konzentrationen enthalten, sind vorteilhaft, da solche Bindemittelzusammensetzungen eine insbesondere verbesserte Fließfähigkeit aufweisen.

Bevorzugt ist auch eine erfindungsgemäße Bindemittelzusammensetzung (wie vorstehend definiert, vorzugsweise wie vorstehend als bevorzugt definiert), umfassend

- Phenoxyethanol (Phenylmonoethylenglycolether) und/oder Butyldiglykol (Diethylenglycolbutylether) und/oder Monoethylenglykol in einer Gesamtmenge im Bereich von 3 bis 10 Gew.-%, bevorzugt im Bereich von 3 - 6 Gew. %, bezogen auf die Gesamtmasse der Bindemittelzusammensetzung.

Bevorzugte erfindungsgemäße Bindemittelzusammensetzungen wie vorstehend definiert weisen die gleichen vorteilhaften technischen Effekte auf, die bereits vorstehend für bevorzugte erfindungsgemäße Bindemittelzusammensetzungen definiert wurden, welche eine oder mehrere Verbindungen ausgewählt aus der Gruppe bestehend aus Polyalkylenglykole, Phenylalkylenglykolether, Propylenglycolalkylether, substituierte oder unsubstituierte Pyrrolidone, Monoethylenglykol und Polyethylenglykol umfassen.

Bevorzugt ist auch eine erfindungsgemäße Bindemittelzusammensetzung (wie vorstehend definiert, vorzugsweise wie vorstehend als bevorzugt definiert), zudem umfassend

- 1,3,5-Trioxacyclohexan in einer Gesamtmenge im Bereich von 0,1 bis 5%, vorzugsweise im Bereich von 0,5 bis 1,5%.

Die Anwesenheit von 1,3,5-Trioxacyclohexan führt zu einer besonderen Festigkeit des resultierenden Gießereiformkörpers beim Abguß. Dieser vorteilhafte technische Effekt ist vermutlich darauf zurückzuführen, dass beim Zerfall des 1,3,5-Trioxacyclohexan beim Abguß des Gießereiformkörpers zusätzliches Formaldehyd frei wird, welches zu einer zusätzlichen Quervernetzung zwischen den Oligomeren des Phenolaldehydharzes und somit zu der besonderen Festigkeit des resultierenden Gießereiformkörpers beiträgt.

Bevorzugt ist auch eine erfindungsgemäße Bindemittelzusammensetzung (wie vorstehend definiert, vorzugsweise wie vorstehend als bevorzugt definiert), wobei der pH-Wert bei 20 °C im Bereich von 12 bis 14, bevorzugt in einem Bereich von 13 bis 14, liegt.

Bindemittelzusammensetzungen mit einem pH von 12 bis 14, insbesondere mit einem pH von 13 bis 14, können über einen längeren Zeitraum ohne eine bemerkbare Verschlechterung der Eigenschaften der Bindemittelzusammensetzung gelagert werden.

Bevorzugt ist auch eine erfindungsgemäße Bindemittelzusammensetzung (wie vorstehend definiert, vorzugsweise wie vorstehend als bevorzugt definiert), wobei die molare Menge der Phenolgruppen in der wässrigen alkalischen Bindemittelzusammensetzung im Bereich von 1,5 bis 2,5 mol/kg, bevorzugt im Bereich von 1,8 bis 2,0 mol/kg, bezogen auf die Gesamtmasse der Bindemittelzusammensetzung, liegt und/oder die Viskosität der alkalischen Bindemittelzusammensetzung bei 20 °C im Bereich von 100-1000 mPas, vorzugsweise 150-700 mPas, besonders bevorzugt 150-500 mPas liegt, bestimmt gemäß DIN EN ISO 3219:1994. Zu weiteren Details der Messmethode siehe unten.

Mit den bevorzugten erfindungsgemäßen Bindemittelzusammensetzungen wie vorstehend definiert können besonders stabile (feste) Gießereiformkörper hergestellt werden. Die vorstehend definierte Menge an Phenolgruppen ist vorzugsweise Bestandteil eines Phenolaldehydharzes mit einem mittleren Molekulargewicht (Mw) im Bereich von 750 bis 1200 g/mol. Hinsichtlich bevorzugter mittlerer Molekulargewichte gelten die obigen Ausführungen entsprechend.

Bei Einstellung einer bevorzugten Viskosität ist das Mischen der erfindungsgemäßen wässrigen alkalischen Bindemittelzusammensetzung mit Gießereiformstoff sowie die Verarbeitung der resultierenden Formstoffmischung in einer Kernschießmaschine besonders unproblematisch.

Bevorzugt ist auch eine erfindungsgemäße Bindemittelzusammensetzung (wie vorstehend definiert, vorzugsweise wie vorstehend als bevorzugt definiert), wobei das molare Verhältnis der Gesamtmenge an Alkalimetallen zu Phenolgruppen im Bereich von 1,0 : 1 bis 2,5 : 1 liegt, bevorzugt im Bereich von 1,5 : 1 bis 2,1 : 1, besonders bevorzugt im Bereich von 1,7 : 1 bis 1,9 : 1
und/oder
wobei die molare Menge der Alkalimetalle in der wässrigen alkalischen Bindemittelzusammensetzung im Bereich von 1,0 bis 7,5 mol/kg liegt, bevorzugt im Bereich von 2,0 bis 6,0 mol/kg, besonders bevorzugt im Bereich von 3,0 bis 4,0 mol/kg, bezogen auf die Gesamtmasse der Bindemittelzusammensetzung.

Bevorzugt ist auch eine erfindungsgemäße Bindemittelzusammensetzung (wie vorstehend definiert, vorzugsweise wie vorstehend als bevorzugt definiert), wobei das molare Verhältnis der Gesamtmenge an Kalium-Kationen zu der Gesamtmenge an Natrium-Kationen im Bereich von 47 : 1 bis 59 : 1 liegt, bevorzugt im Bereich von 50 : 1 bis 56 : 1, besonders bevorzugt im Bereich von 52 : 1 bis 55 : 1.

Vorstehend beschriebene erfindungsgemäße Bindemittelzusammensetzungen haben den weiteren Vorteil, dass sie durch die definierte Menge bzw. durch das definierte Verhältnis eine optimale Reaktivität für eine Härtung mit Kohlendioxidgas bei gleichzeitig ausreichender Lagerbeständigkeit der vorstehend beschriebenen Bindemittelzusammensetzungen erzielen.

Bevorzugt ist insbesondere eine erfindungsgemäße Bindemittelzusammensetzung (wie vorstehend definiert, vorzugsweise wie vorstehend als bevorzugt definiert), zur Härtung mit Kohlendioxidgas im Phenol-Resol-$CO_2$-Verfahren, umfassend

- ein Phenolgruppen umfassendes, negativ geladenes oder ungeladenes Phenolaldehydharz, welches ausgewählt ist aus der Gruppe bestehend aus Resolen und Mischungen umfassend ein oder mehrere Resole sowie ein oder mehrere Novolake, wobei das Phenolaldehydharz ein mittleres Molekulargewicht (Mw) im Bereich von 750 bis 1200 g/mol besitzt, vorzugsweise im Bereich von 800 bis 1100 g/mol und besonders bevorzugt im Bereich von 850 bis

1000 g/mol, bestimmt mittels Gel-Permeations-Chromatographie,

- ein Oxyanion, ausgewählt aus der Gruppe bestehend aus Borat-Ionen, Aluminat-Ionen, Stannat-Ionen, Zirkonat-Ionen, Titanat-Ionen und deren Mischungen, zum Ausbilden eines stabilen Komplexes mit dem negativ geladenen oder ungeladenen Phenolaldehydharz
sowie

- ein oder mehrere Epoxysilane, vorzugsweise ausgewählt aus der Gruppe bestehend aus 3-Glycidyloxy-propyl-triethoxysilan und 3-Glycidyloxy-propyl-trimethoxysilan, in einer Gesamtmenge im Bereich von 2,5 bis 10 Gew.-%, bezogen auf die Gesamtmasse der Bindemittelzusammensetzung,

wobei die molare Gesamtmenge der Phenolgruppen des Phenolaldehydharzes in der wässrigen alkalischen Bindemittelzusammensetzung im Bereich von 1,8 bis 2,0 mol/kg liegt, bezogen auf die Gesamtmasse der wässrigen alkalischen Bindemittelzusammensetzung.

Die vorstehend definierte spezifische erfindungsgemäße Bindemittelzusammensetzung führt zu ganz besonders festen Gießereiformkörpern.

Die vorliegende Erfindung betrifft auch eine Verwendung einer wässrigen alkalischen Bindemittelzusammensetzung wie vorstehend definiert (vorzugsweise wie vorstehend als bevorzugt definiert) als Bindemittel für einen Gießereiformstoff, vorzugsweise in einem Verfahren, in dem das Bindemittel durch Begasung mit Kohlendioxidgas gehärtet wird.

Sämtliche Aspekte der Erfindung, welche vorstehend im Zusammenhang mit der erfindungsgemäßen Bindemittelzusammensetzung offenbart wurden, gelten *mutatis mutandis* auch für die erfindungsgemäße Verwendung (wie soeben definiert) und eine entsprechende erfindungsgemäße Formstoffmischung sowie für ein entsprechendes Verfahren zur Herstellung eines Gießereiformkörpers und einen entsprechenden Gießereiformkörper (wie jeweils nachfolgend definiert). Gleichermaßen gelten sämtliche Aspekte, welche im Zusammenhang mit einer Verwendung, einer Formstoffmischung zur Herstellung eines Gießereiformkörpers sowie einem entsprechenden Verfahren zur Herstellung eines Gießereiformkörpers und einem entsprechenden Gießereiformkörper genannt werden, *mutatis mutandis* auch für eine wässrige alkalische Bindemittelzusammensetzung gemäß der vorliegenden Erfindung.

Die vorliegende Erfindung betrifft auch eine Formstoffmischung zur Herstellung eines Gießereiformkörpers, umfassend

- eine erfindungsgemäße wässrige alkalische Bindemittelzusammensetzung wie vorstehend definiert (vorzugsweise wie vorstehend als bevorzugt definiert)
und

- einen Gießereiformstoff.

Der Begriff "Gießereiformkörper" umfasst insbesondere Kerne, Formen und Speiserelemente zur Verwendung beim Gießen.

Die wässrige alkalische Bindemittelzusammensetzung ist zur Härtung mit Kohlendioxidgas in Gegenwart des Gießereiformstoffs geeignet. Die Formstoffmischung insgesamt ist somit mit Kohlendioxidgas härtbar.

Den Begriff "Gießereiformstoff" umfasst insbesondere Formsande, Schamotten, Hohlkugeln und Kern-Hülle-Partikel. Gießereiformstoffe sind dabei vorzugsweise feuerfest.

Als feuerfester (und überdies vorzugsweise rieselfähiger) Gießereiformstoff wird häufig Quarzsand verwendet, aber auch andere Gießereiformstoffe wie z.B. Zirkonsande, Chromitsande, Schamotten, Olivinsande, Hohlkugeln, Kern-Hülle-Partikel, feldspathaltige Sande und Andalusitsande.

Die Schüttdichte der Formstoffmischung (zur Herstellung von Speiserelementen) ist vorzugsweise 2 $g/cm^3$ oder kleiner, bevorzugt 1,6 $g/cm^3$ oder kleiner, besonders bevorzugt 1,2 $g/cm^3$ oder kleiner, ganz besonders bevorzugt 1 $g/cm^3$ oder kleiner, noch mehr bevorzugt 0,8 $g/cm^3$ oder kleiner, idealerweise 0,7 $g/cm^3$ oder kleiner.

Das Massenverhältnis der Gesamtmenge an erfindungsgemäßer wässriger alkalischer Bindemittelzusammensetzung zu der Gesamtmenge an Gießereiformstoff in einer erfindungsgemäßen Bindemittelzusammensetzung liegt bevorzugt im Bereich von 10 : 100 bis 0,5 : 100, besonders bevorzugt im Bereich von 5 : 100 bis 1 : 100.

Die vorliegende Erfindung betrifft auch ein Verfahren zur Herstellung eines Gießereiformkörpers (z.B. Form, Kern oder Speiserelement), mit folgenden Schritten:

- Herstellen oder Bereitstellen einer Formstoffmischung wie vorstehend definiert,

- Formen der hergestellten oder bereitgestellten Formstoffmischung,

- Härten der geformten Formstoffmischung durch Begasen mit Kohlendioxidgas.

Auf die Oberfläche eines nach Härten der geformten Formstoffmischung durch Begasen mit Kohlendioxidgas vorliegenden Gießereiformkörpers (vorzugsweise eines Kerns) wird vorzugsweise zum Glätten der Oberflächenstruktur eine Schlichtezusammensetzung appliziert, so dass ein geschlichteter (und damit geglätteter) Gießereiformkörper (vorzugsweise Kern) resultiert.

Sämtliche Aspekte der Erfindung, welche im Zusammenhang mit einer wässrigen alkalischen Bindemittelzusammensetzung zur Aushärtung mit Kohlendioxid vorstehend genannt wurden, gelten *mutatis mutandis* auch für ein entsprechendes Verfahren zur Herstellung eines Gießereiformkörpers und einen entsprechenden Gießereiformkörpers. Gleichermaßen gelten sämtliche Aspekte, welche nachfolgend im Zusammenhang mit einem entsprechenden Verfahren zur Herstellung eines Gießereiformkörpers und einem entsprechenden Gießereiformkörper genannt werden, *mutatis mutandis* auch für eine wässrige alkalische Bindemittelzusammensetzung gemäß der vorliegenden Erfindung.

Die vorliegende Erfindung betrifft auch einen entsprechenden Gießereiformkörper (z.B. Form, Kern oder Speiserelement),
herstellbar durch ein erfindungsgemäßes Verfahren zur Herstellung eines Gießereiformkörpers wie vorstehend definiert.

Ein erfindungsgemäßer Gießereiformkörper, insbesondere ein erfindungsgemäßer Kern, ist vorzugsweise geschlichtet. D.h., auf der Oberfläche des Kerns befindet sich bzw. die Oberfläche des Kerns wird gebildet durch Schlichtematerial. Schlichtematerial ist regelmäßig eine Substanzmischung, die insbesondere feuerfestes Material umfasst.

In den weiter unten erläuterten Beispielen werden die folgenden Messmethoden eingesetzt.

Messmethode (Biegefestigkeit):

Hinsichtlich der verwendeten Messmethode für die Biegefestigkeit gilt:
Die anwendungstechnische Prüfung der Biegefestigkeit von Biegestäben hergestellt mit erfindungsgemäßen und nicht-erfindungsgemäßen Bindemittelzusammensetzungen erfolgt in Anlehnung an VDG Merkblatt P73, Verfahren F (in [$N/cm^2$]). In einen geeigneten Mischbehälter werden 4 kg Quarzsand H32 (Quarzwerke GmbH, Frechen) vorgelegt. Es werden 120 g einer (erfindungsgemäßen oder nicht-erfindungsgemäßen) Bindemittelzusammensetzung (3 Gew.-% bezogen auf die 4 kg Quarz Sand H32) zugegeben, sodass eine Vormischung entsteht. Die Vormischung wird in einen Mischer der Firma Multiserw, Typ RN10/20 gegeben und die Mischzeit beträgt 2 Minuten auf Stufe 4. Es resultiert eine Sandmischung.

Die Herstellung von Biegestäben erfolgt mit einer Kernschießmaschine LUT-c der Firma Multiserw. Hierzu wird die frisch hergestellte Sandmischung in den Schießkopf der Maschine eingefüllt. Die Biegestäbe werden mit einem Schießdruck von 5 bar, Schusszeit 3 Sekunden, geschossen. Die geschossenen Biegestab-Vorprodukte werden für 15 Sekunden mit 1 bar $CO_2$ begast. Nach erfolgter $CO_2$ Begasung wird der Kern (d.h. der resultierende Biegestab) für 10 Sekunden mit Luft gespült und dann dem Kernkasten entnommen.

Im Anschluss wird der resultierende Biegestab für eine bestimmte Zeit gelagert (siehe nachfolgende Option a)) oder geschlichtet (siehe nachfolgende Option b)).

a) Biegefestigkeit der Biegestäbe nach 15 s, 1 Stunde, 24 Stunden und 5 Tagen:
Die Festigkeitsprüfung wird nach verschiedenen Lagerzeiten der Biegestäbe durchgeführt. Die Lagerzeit der Biegestäbe beträgt nach Entnahme aus der Maschine

- 15 Sekunden (nachfolgend bezeichnet als "Biegefestigkeit nach 15 Sekunden"),
- 1 Stunde (nachfolgend bezeichnet als "Biegefestigkeit nach 1 Stunde"),
- 24 Stunden (nachfolgend bezeichnet als "Biegefestigkeit nach 24 Stunden") und
- 5 Tage nach Entnahme (nachfolgend bezeichnet als "Biegefestigkeit nach 5 Tagen").

Die Biegestäbe werden bis zum Testen im Abzug bei 20 °C (+/- 2 °C) und einer relativen Luftfeuchtigkeit von 47% (+/- 2 %) gelagert.
Die anschließende Festigkeitsprüfung der Biegestäbe erfolgt mit einem Multiserw Prüfgerät LR-u-2e, Fa. Multiserw. Hierzu wird der jeweilige gelagerte Biegestab in die Maschine eingelegt und zerbrochen.
b) Schlichtetest (Herstellung von geschlichteten Biegestäben):
Bei einem weiterem, dem sogenannten Schlichtetest, werden die resultierenden Biegestäbe während einer Stunde im Abzug gelagert und dann mit einer Wasserschlichte (Arkopal 6804, Fa. Hüttenes-Albertus) überzogen. Die

feuchten Biegestäbe werden 30 Minuten bei 150 °C im Ofen getrocknet, im Abzug abgekühlt und die Biegefestigkeit der geschlichteten Biegestäbe dann nach VDG Merkblatt P 73 in [N/cm$^2$] ermittelt.
Die anschließende Festigkeitsprüfung der Biegestäbe erfolgt mit einem Multiserw Prüfgerät LR-u-2e, Fa. Multiserw. Hierzu wird der jeweilige geschlichtete Biegestab in die Maschine eingelegt und zerbrochen. Die Ergebnisse der Biegefestigkeitsmessungen der resultierenden geschlichteten Biegestäbe werden nachfolgend bezeichnet als Biegestäbe "nach Schlichten".

Messmethode (Gewichtsmittel der Molmassen, d.h. mittleres Molekulargewicht Mw):

Die Gel-Permeations-Chromatographie wurde zur Bestimmung des mittleren Molekulargewichts Mw auf einem HPLC 1260 Instrument der Firma AGILENT durchgeführt.

Analysenbedingungen:

Eluent: 1 M KOH (Wässrige, 1 molare Kalilauge Lösung)
Vorsäule: PSS MCX, 5 jm, Guard, ID 8.0 mm x 300 mm
Säule: PSS MCX, 5 jm, 500 Ä, ID 8.0 mm x 300 mm
Pumpe: PSS SECcurity 1260 HPLC Pumpe
Fluss 0,5 mL/min
Injektionssystem:

PSS SECcurity 1260 Autosampler
Injektionsvolumen: 10 µL
Probenkonzentration: 2 g/L
Temperatur: 23 °C
Detektoren: PSS SECcurity 1260 Differentialrefraktometer (RID) und PSS SECcurity 1290 UV-Detektor (A=254 nm)
Auswertung: PSS-WinGPC UniChrom Version 8.2

Probenvorbereitung:

Die Proben wurden auf einer analytischen Waage eingewogen und mit einem berechneten Volumen des Eluenten versetzt. Die eingestellte Probenkonzentration betrug 2 g/L. Anschließend wurden die Proben bei Raumtemperatur im vorgelegten berechneten Volumen des Eluenten gelöst und ohne vorherige Filtration zur Messung injiziert.

Kalibrierung und Auswertung:

Zunächst wurde eine Kalibration mit Pullulan-Standards durchgeführt. Die Berechnungen der Molmassenmittelwerte und deren Verteilung erfolgten rechnergestützt mittels der Streifenmethode, basierend auf der Pullulan-Kalibrierkurve.
Das Gewichtsmittel der Molmassen, d.h. mittleres Molekulargewicht Mw, wurde dabei auf Basis der folgenden Formel bestimmt:

$$M_w = \frac{\Sigma\ w_i \cdot M_i}{\Sigma\ w_i}$$

wobei

$w_i$ = Masse der Moleküle einer Fraktion
und
$M_i$ = Molmasse einer Fraktion
ist.

Messmethode (Viskosität der wässrigen alkalischen Bindemittelzusammensetzung): Die Viskosität der wässrigen alkalischen Bindemittelzusammensetzung wurde bei einer Temperatur von 20 °C mittels des Instruments "HAAKE Viscotester 550" der Firma Thermo Fisher Scientific in Kombination mit der Spindel/Messeinrichtung "SV1" gemäß DIN EN ISO 3219:1994 bestimmt.

**Beispiele:**

Die nachfolgenden Beispiele sollen die Erfindung erläutern, ohne sie einzuschränken.

Die in den Beispielen verwendete Angabe "GT" bedeutet Gewichtsteile (Massenteile).

Beispiel 1:

Allgemeine Darstellvorschrift -- Herstellung einer Bindemittelzusammensetzunq mit variablem Anteil an Silan und variablem Molekulargewicht eines hergestellten Resols:

Eine Bindemittelzusammensetzung wird wie folgt hergestellt:

1. Herstellungsschritt:
Es wird eine Vormischung hergestellt durch Vermischen von

- 174,8 GT Phenol und

- 1,72 GT Borsäure,

2. Herstellungsschritt:
Zu der Vormischung aus Herstellschritt 1 werden

- 8,4 GT Trioxan (d.h. 1,3,5-Trioxacyclohexan) und
- 7,7 GT einer wässrigen Lösung mit 33 Gew.-% NaOH (d.h. Natronlauge 33%, wässrig)

hinzugefügt.

3. Herstellungsschritt:
Die Mischung wird auf 65 °C angeheizt und

- 243,2 GT einer 53%igen Formaldehyd Lösung,

über einen Zeitraum von 45 Minuten zudosiert.

4. Herstellungsschritt:
Die Reaktionsmischung wird auf 80 °C angehizt und bei einer Temperatur zwischen 80 und 90 °C kondensiert bis eine Mischung vorliegt mit einer Viskosität von 300 mPas bei 25 °C.

5. Herstellungsschritt:
Nach Erreichen der gewünschten Viskosität der Reaktionsmischung erfolgt eine Zugabe von 76,1 GT einer wässrigen Lösung mit 45 Gew.-% KOH (d.h. Kalilauge 45%ig, wässrig)

6. Herstellungsschritt:
Anschließend wird bei einer Temperatur von 70 °C bis zu einem definierten mittleren Molekulargewicht Mw des Resols der Reaktionsmischung kondensiert.
Anmerkung: Das mittlere Molekulargewicht Mw für konkrete Beispiele ergibt sich aus Tabelle 2 unten.

7. Herstellungsschritt:
Sobald das definierte mittlere Molekulargewicht erreicht ist, wird die Reaktionsmischung in weniger als 5 Minuten auf 40 °C abgekühlt.

8. Herstellungsschritt:
Anschließend erfolgt eine Zugabe von 299,1 GT einer wässrigen Lösung mit 45 Gew.-% KOH, 9,5 GT 3,5,5-Trimethylhexansäure, 48,1 GT Borax (CAS-Nummer 1303-96-4), 0,072 GT Aluminiumhydroxid und 88 GT Polyethylenglykol mit einem mittleren Molekulargewicht von 200 g/mol (CAS-Nr.: 25322-68-3) zur Reaktionsmischung, welche im Anschluss auf unter 30 °C abgekühlt wird.

9. Herstellungsschritt:

Nach Abkühlen auf eine Temperatur von unter 30 °C wird eine definierte Menge an 3-Glycidyloxypropyltrimethoxysilan zugesetzt.

Anmerkung: Die in konkreten Beispielen eingesetzte Menge an Silan ergibt sich aus Tabelle 1 unten.

Beispiel 2:

Herstellung von Bindemittelzusammensetzunqen mit verschiedenen Mengen an Silan:

Gemäß der vorstehenden Darstellvorschrift (Beispiel 1) wurden Bindemittelzusammensetzungen mit verschiedenen Mengen an Silan hergestellt (vgl. Beispiel 1, 7. Herstellungsschritt) und wie vorstehend beschrieben jeweils zu Biegestäben verarbeitet. Nach einer unterschiedlich langen Lagerzeit (siehe Option a) unter Messmethode (Biegefestigkeit)) bzw. nach dem Schlichten (siehe Option b) unter Messmethode (Biegefestigkeit)) wurden die Festigkeiten der jeweiligen Biegestäbe bestimmt.

Es wurden dabei jeweils bis zu einem mittleren Molekulargewicht Mw des Resols von ca. 784 g/mol kondensiert (vgl. Beispiel 1, 4. Herstellungsschritt).

Die eingesetzten Mengen an Silan (in Gew.-%, bezogen auf die Gesamtmasse der Bindemittelzusammensetzung) und die Ergebnisse der Messungen zur Biegefestigkeit sind in Tabelle 1 dargestellt:

Tabelle 1

| **Silanmenge (3-Glycidyloxypropyltrimethoxysilan) [Gew.-%]** | **Biegefestigkeiten [N/cm²]** | | |
|---|---|---|---|
| | **nach 24 Stunden** | **nach 5 Tagen** | **nach Schlichten** |
| 0,5 | 160 | 90 | 230 |
| 1 | 180 | 100 | 250 |
| 2 | 190 | 110 | 250 |
| 3 | 200 | 140 | 280 |
| 4 | 210 | 170 | 300 |
| 5 | 220 | 170 | 290 |
| 6 | 200 | 170 | 300 |
| 7 | 190 | 160 | 290 |
| 8 | 180 | 150 | 290 |
| 9 | 170 | 130 | 290 |
| 10 | 140 | 110 | 290 |

Die Ergebnisse gemäß Tabelle 1 sind in den Figuren 1 und 2 graphisch dargestellt. Die Figur 2 enthält aus Gründen der Übersichtlichkeit eine Auswahl der Daten aus Tabelle 1.

In Figur 1 sind Biegefestigkeiten von gemäß Beispiel 2 mit verschiedenen Mengen an Silan hergestellten Biegestäben nach 24 Stunden und nach 5 Tagen Lagerung sowie nach dem Schlichten gezeigt. Für jede der vorstehend genannten Lagerzeiten beziehungsweise für den Fall, dass die Biegestäbe geschlichtet wurden, wurden jeweils 10 Bindemittelzusammensetzungen mit verschiedenen Mengen an Silan (0,5 bis 10 Gew.-%) verwendet (siehe x-Achse der Figur 1), um die Abhängigkeit der Biegefestigkeit von der eingesetzten Menge an Silan zu untersuchen. Die Zahlen in den Balken der Figur 1 beziehen sich auf die zur Herstellung des jeweiligen Biegestabes verwendete Menge an Silan in Gew.-% (d.h. die Zahl "0,5" im ersten Balken der Messreihe "nach 24 Stunden" in Figur 1 bedeutet, dass eine Silanmenge von 0,5 Gew.-% zur Herstellung des verwendeten Biegestabs eingesetzt wurde).

Figur 2 zeigt eine Auswahl der Biegefestigkeiten der gemäß Beispiel 2 mit verschiedenen Mengen an Silan hergestellten Biegestäbe (nach einer Lagerzeit von 24 Stunden oder 5 Tagen beziehungsweise nach dem Schlichten). In Fig. 2 ist im Gegensatz zu Figur 1 auf der X-Achse ausschließlich die Menge an Silan in Gew.-% angegeben.

In Figur 2 ist gut erkennbar, dass sämtliche Mischungen umfassend mehr als 2 Gew.-% an 3-Glycidyloxypropyltrimethoxysilan in den Messungen "nach dem Schlichten" sowie "nach 5 Tagen" eine höhere Biegefestigkeiten aufweisen als solche Mischungen, bei denen ein geringerer Silangehalt vorliegt.

Überdies ist aus Figur 2 ersichtlich, dass in der Spalte "nach 24 Stunden" bei Konzentrationen von 3-Glycidyloxypropyltrimethoxysilan im Bereich von 4-6 Gew.-% der gemessene Wert für die Biegefestigkeit besonders hoch ist. Im Unterschied dazu liegen sowohl bei niedrigeren Silankonzentrationen (< 4 Gew.-%) als auch bei höheren Silankonzentrationen (> 6 Gew.-%) die Werte für die Messungen "nach 24 Stunden" niedriger.

Messungen mit einer Mischung umfassend eine Menge an 3-Glycidyloxypropyltrimethoxysilan im Bereich von 4 bis 6 Gew.-% sind somit mit mehreren überraschenden technischen Effekten verknüpft (vgl. auch die Figuren 1 und 2), nämlich

a) einem besonders hohen Messwert gemäß Spalte "nach Schlichten" (und analog "nach 5 Tagen") und

b) (zusätzlich) einem hohen Messwert gemäß Spalte "nach 24 Stunden".

Beispiel 3:

Herstellung von Bindemittelzusammensetzunqen mit Resolen verschiedener mittlerer Molekulargewichte Mw:

Es wurden Bindemittelzusammensetzungen mit Resolen verschiedener mittlerer Molekulargewichte Mw hergestellt, und nach einer unterschiedlich langen Lagerzeit (siehe Option a) unter "Messmethode (Biegefestigkeit)") bzw. nach dem Schlichten (siehe Option b) unter "Messmethode (Biegefestigkeit)") wurden die jeweiligen Biegestäbe auf ihre Festigkeit hin untersucht.

Es wurden dabei jeweils 5 Gew.-% 3-Glycidyloxypropyltrimethoxysilan eingesetzt, bezogen auf die Gesamtmasse der Bindemittelzusammensetzung.

Die Ergebnisse sind in Tabelle 2 dargestellt:

Tabelle 2

| **Mittleres Molekulargewicht Mw des Resols (g/mol)** | **Biegefestigkeiten [N/cm$^2$]** | | | | |
|---|---|---|---|---|---|
| | **nach 15 Sekunden** | **nach 1 Stunde** | **nach 24 Stunden** | **nach 5 Tagen** | **nach Schlichten** |
| 724 | 80 | 180 | 110 | 110 | 110 |
| 731 | 100 | 200 | 160 | 120 | 160 |
| 784 | 110 | 210 | 210 | 160 | 350 |
| 814 | 110 | 210 | 200 | 160 | 330 |
| 876 | 130 | 200 | 200 | 140 | 320 |
| 960 | 130 | 200 | 200 | 140 | 320 |

Die Ergebnisse der Tabelle 2 sind in Figur 3 graphisch dargestellt.

Sämtliche Mischungen umfassend Resole mit einem Molekulargewicht Mw von über 750 g/mol zeigten in sämtlichen Messungen (Biegestäbe nach einer Lagerung für 15 Sekunden, für 1 Stunde, für 24 Stunden, für 5 Tagen, bzw. nach dem Schlichten) eine höhere oder eine unveränderte Biegefestigkeiten im Vergleich mit solchen Mischungen umfassend Phenolaldehydharze und/oder deren Salze mit einem Molekulargewicht Mw von weniger als 750 g/mol. Dies gilt insbesondere für die Anfangsfestigkeiten (d.h. Biegefestigkeit nach 15 Sekunden) und für die Biegefestigkeiten der geschlichteten Gießereiformkörper. Für Molekulargewichte im Bereich von 850 bis 980 g/mol (nämlich 876 bzw. 960 g/mol) wurden für die Anfangsfestigkeiten (d.h. Biegefestigkeit nach 15 Sekunden) besonders hohe Biegefestigkeiten bestimmt.

**Patentansprüche**

**1.** Wässrige alkalische Bindemittelzusammensetzung zur Härtung mit Kohlendioxidgas, umfassend

- ein Phenolgruppen umfassendes, negativ geladenes oder ungeladenes Phenolaldehydharz, welches ausgewählt ist aus der Gruppe bestehend aus Resolen und Mischungen umfassend ein oder mehrere Resole sowie ein oder mehrere Novolake,

- ein Oxyanion, ausgewählt aus der Gruppe bestehend aus Borat-Ionen, Aluminat-Ionen, Stannat-Ionen, Zirkonat-Ionen, Titanat-Ionen und deren Mischungen, zum Ausbilden eines stabilen Komplexes mit dem Resol-Phenolaldehydharz sowie
- ein oder mehrere Silane in einer Gesamtmenge im Bereich von 2,5 bis 10 Gew.-%, bezogen auf die Gesamtmasse der Bindemittelzusammensetzung,

wobei die molare Gesamtmenge der Phenolgruppen des Phenolaldehydharzes in der wässrigen alkalischen Bindemittelzusammensetzung im Bereich von 1 bis 3 mol/kg liegt, bezogen auf die Gesamtmasse der wässrigen alkalischen Bindemittelzusammensetzung.

**2.** Wässrige alkalische Bindemittelzusammensetzung nach Anspruch 1, umfassend

- ein oder mehrere Silane in einer Gesamtmenge im Bereich von 3,0 bis 10 Gew.-%, vorzugsweise 3,5 bis 7 Gew.-%, besonders bevorzugt 3,5 bis 6 Gew.-%, bezogen auf die Gesamtmasse der Bindemittelzusammensetzung.

**3.** Wässrige alkalische Bindemittelzusammensetzung nach einem der vorangehenden Ansprüche,
wobei ein oder mehrere oder sämtliche der eingesetzten Silane ausgewählt sind aus der Gruppe bestehend aus 3-Aminopropyltriethoxysilan, N-(2-Aminoethyl)-3-aminopropyl-trimethoxysilan und Phenyltrimethoxysilan und/oder ausgewählt sind aus der Gruppe der Epoxysilane,
und wobei ein oder mehrere der eingesetzten Silane vorzugsweise ausgewählt sind aus der Gruppe bestehend aus 3-(Glycidyloxy)propyl-triethoxysilan und 3-(Glycidyloxy)propyl-trimethoxysilan.

**4.** Wässrige alkalische Bindemittelzusammensetzung nach Anspruch 3, als Silane umfassend

- Epoxysilane, vorzugsweise ausgewählt aus der Gruppe bestehend aus 3-(Glycidyloxy)propyl-triethoxysilan und 3-(Glycidyloxy)propyl-trimethoxysilan, in einer Gesamtmenge im Bereich von 2,5 bis 7 Gew.-%, besonders bevorzugt 4 bis 6 Gew.-%, bezogen auf die Gesamtmasse der Bindemittelzusammensetzung.

**5.** Wässrige alkalische Bindemittelzusammensetzung nach einem der vorangehenden Ansprüche, wobei das negativ geladene oder ungeladene Phenolaldehydharz ein negativ geladenes oder ungeladenes Resol-Phenolaldehydharz ist, zur Härtung mit Kohlendioxidgas im Phenol-Resol-$CO_2$-Verfahren
und/oder
wobei das Phenolaldehydharz ein Gewichtsmittel der Molmassen im Bereich von 750 bis 1200 g/mol besitzt, vorzugsweise im Bereich von 750 bis 1000 g/mol,besonders bevorzugt im Bereich von 780 bis 980 g/mol und ganz besonders bevorzugt im Bereich von 850 bis 980 g/mol, bestimmt mittels Gel-Permeations-Chromatographie.

**6.** Wässrige alkalische Bindemittelzusammensetzung nach einem der vorangehenden Ansprüche, zudem umfassend

- ein oder mehrere Verbindungen ausgewählt aus der Gruppe bestehend aus Polyalkylenglykole, Phenylalkylenglykolether, Propylenglykolalkylether, substituierte oder unsubstituierte Pyrrolidone, Monoethylenglykol und Polyethylenglykol in einer Gesamtmenge im Bereich von 1 bis 40 Gew.-%, vorzugsweise in einer Gesamtmenge von 1 bis 15 Gew.-%, bezogen auf die Gesamtmasse der Bindemittelzusammensetzung und/oder
- Umsetzungsprodukte dieser Verbindung bzw. Verbindungen und/oder
zudem umfassend
- ein oder mehrere Verbindungen aus der Gruppe bestehend aus C4-C20 gesättigten oder ungesättigten aliphatischen Carbonsäuren und Alkalisalzen der besagten Säuren, in einer Gesamtmenge im Bereich von 0,1 bis 5,0 Gew.-%, vorzugsweise in einer Gesamtmenge von 0,5 bis 3 Gew.-%, vorzugsweise in einer Gesamtmenge von 0,8 bis 1,5 Gew.-%, bezogen auf die Gesamtmasse der Bindemittelzusammensetzung, vorzugsweise umfassend
- ein oder beide Verbindungen aus der Gruppe bestehend aus Isononansäure und Alkalisalzen der Isononansäure, in einer Gesamtmenge im Bereich von 0,1 bis 5,0 Gew.-%, vorzugsweise in einer Gesamtmenge von 0,5 bis 3 Gew.-%, vorzugsweise in einer Gesamtmenge von 0,8 bis 1,5 Gew.-%, bezogen auf die Gesamtmasse der Bindemittelzusammensetzung.

**7.** Wässrige alkalische Bindemittelzusammensetzung nach einem der vorangehenden Ansprüche, zudem umfassend

- Phenoxyethanol und/oder Butyldiglykol und/oder Monoethylenglykol in einer Gesamtmenge im Bereich von

3 bis 10 Gew.-%, bevorzugt im Bereich von 3 - 6 Gew. %, bezogen auf die Gesamtmasse der Bindemittelzusammensetzung und/oder
zudem umfassend
- 1,3,5-Trioxacyclohexan in einer Gesamtmenge im Bereich von 0,1 bis 5%, vorzugsweise im Bereich von 0,5 bis 1,5%.

**8.** Wässrige alkalische Bindemittelzusammensetzung nach einem der vorangehenden Ansprüche, wobei der pH-Wert bei 20 °C im Bereich von 12 bis 14, bevorzugt in einem Bereich von 13 bis 14, liegt.

**9.** Wässrige alkalische Bindemittelzusammensetzung nach einem der vorangehenden Ansprüche, wobei
die molare Menge der Phenolgruppen in der wässrigen alkalischen Bindemittelzusammensetzung im Bereich von 1,5 bis 2,5 mol/kg, bevorzugt im Bereich von 1,8 bis 2,0 mol/kg, bezogen auf die Gesamtmasse der Bindemittelzusammensetzung, liegt und/oder
die Viskosität der alkalischen Bindemittelzusammensetzung bei 20 °C im Bereich von 100-1000 mPas, vorzugsweise 150-700 mPas, besonders bevorzugt 150-500 mPas liegt, bestimmt gemäß DIN EN ISO 3219:1994.

**10.** Wässrige alkalische Bindemittelzusammensetzung nach einem der vorangehenden Ansprüche, wobei das molare Verhältnis einer Gesamtmenge an Alkalimetallen zu Phenolgruppen im Bereich von 1,0 : 1 bis 2,5 : 1 liegt, bevorzugt im Bereich von 1,5 : 1 bis 2,1 : 1, besonders bevorzugt im Bereich von 1,7 : 1 bis 1,9 : 1
und/oder
wobei die molare Menge der Alkalimetalle in der wässrigen alkalischen Bindemittelzusammensetzung im Bereich von 1,0 bis 7,5 mol/kg liegt, bevorzugt im Bereich von 2,0 bis 6,0 mol/kg, besonders bevorzugt im Bereich von 3,0 bis 4,0 mol/kg, bezogen auf die Gesamtmasse der Bindemittelzusammensetzung
und/oder
wobei das molare Verhältnis einer Gesamtmenge an Kalium-Kationen zu einer Gesamtmenge an Natrium-Kationen im Bereich von 47 : 1 bis 59 : 1 liegt, bevorzugt im Bereich von 50 : 1 bis 56 : 1, besonders bevorzugt im Bereich von 52 : 1 bis 55 : 1.

**11.** Wässrige alkalische Bindemittelzusammensetzung nach einem der vorangehenden Ansprüche, zur Härtung mit Kohlendioxidgas im Phenol-Resol-$CO_2$-Verfahren, umfassend

- ein Phenolgruppen umfassendes, negativ geladenes oder ungeladenes Phenolaldehydharz wie in Anspruch 1 definiert,
wobei das Phenolaldehydharz ein Gewichtsmittel der Molmassen im Bereich von 750 bis 1200 g/mol besitzt, vorzugsweise im Bereich von 800 bis 1100 g/mol und besonders bevorzugt im Bereich von 850 bis 1000 g/mol, bestimmt mittels Gel-Permeations-Chromatographie,
- ein Oxyanion wie in Anspruch 1 definiert, zum Ausbilden eines stabilen Komplexes mit dem negativ geladenen oder ungeladenen Phenolaldehydharz sowie
- ein oder mehrere Epoxysilane, vorzugsweise ausgewählt aus der Gruppe bestehend aus 3-Glycidyloxy-propyltriethoxysilan und 3-Glycidyloxy-propyl-trimethoxysilan, in einer Gesamtmenge im Bereich von 2,5 bis 10 Gew.-%, bezogen auf die Gesamtmasse der Bindemittelzusammensetzung,

wobei die molare Gesamtmenge der Phenolgruppen des Phenolaldehydharzes in der wässrigen alkalischen Bindemittelzusammensetzung im Bereich von 1,8 bis 2,0 mol/kg liegt, bezogen auf die Gesamtmasse der wässrigen alkalischen Bindemittelzusammensetzung.

**12.** Verwendung einer wässrigen alkalischen Bindemittelzusammensetzung nach einem der vorangehenden Ansprüche als Bindemittel für einen Gießereiformstoff, vorzugsweise in einem Verfahren, in dem das Bindemittel durch Begasung mit Kohlendioxidgas gehärtet wird.

**13.** Formstoffmischung zur Herstellung eines Gießereiformkörpers, umfassend

- eine wässrige alkalische Bindemittelzusammensetzung nach einem der vorangehenden Ansprüche 1 bis 11 und
- einen Gießereiformstoff.

**14.** Verfahren zur Herstellung eines Gießereiformkörpers, mit folgenden Schritten:

- Herstellen oder Bereitstellen einer Formstoffmischung nach Anspruch 13,
- Formen der hergestellten oder bereitgestellten Formstoffmischung,
- Härten der geformten Formstoffmischung durch Begasen mit Kohlendioxidgas.

**15.** Gießereiformkörper,
herstellbar durch ein Verfahren nach Anspruch 14.

**Claims**

**1.** Aqueous alkaline binder composition for curing with carbon dioxide gas, comprising

- a negatively charged or uncharged phenol-aldehyde resin, comprising phenol groups, which is selected from the group consisting of resoles and mixtures comprising one or more resoles and also one or more novolacs,
- an oxyanion, selected from the group consisting of borate ions, aluminate ions, stannate ions, zirconate ions, titanate ions, and mixtures thereof, for forming a stable complex with the resole-phenol-aldehyde resin and
- one or more silanes in a total amount in the range from 2.5 to 10 wt%, based on the total mass of the binder composition,

where the total molar amount of the phenol groups of the phenol-aldehyde resin in the aqueous alkaline binder composition is in the range from 1 to 3 mol/kg, based on the total mass of the aqueous alkaline binder composition.

**2.** Aqueous alkaline binder composition according to Claim 1, comprising

- one or more silanes in a total amount in the range from 3.0 to 10 wt%, preferably 3.5 to 7 wt%, more preferably 3.5 to 6 wt%, based on the total mass of the binder composition.

**3.** Aqueous alkaline binder composition according to either of the preceding claims,
where one or more or all of the silanes used are selected from the group consisting of 3-aminopropyltriethoxysilane, N-(2-aminoethyl)-3-aminopropyltrimethoxysilane and phenyltrimethoxysilane and/or are selected from the group of epoxysilanes,
and where one or more of the silanes used are preferably selected from the group consisting of 3-(glycidyloxy)propyltriethoxysilane and 3-(glycidyloxy)propyltrimethoxysilane.

**4.** Aqueous alkaline binder composition according to Claim 3, comprising as silanes

- epoxysilanes, preferably selected from the group consisting of 3-(glycidyloxy)propyltriethoxysilane and 3-(glycidyloxy)propyltrimethoxysilane, in a total amount in the range from 2.5 to 7 wt%, more preferably 4 to 6 wt%, based on the total mass of the binder composition.

**5.** Aqueous alkaline binder composition according to any of the preceding claims, where the negatively charged or uncharged phenol-aldehyde resin is a negatively charged or uncharged resole-phenol-aldehyde resin, for curing with carbon dioxide gas in the phenol-resole-$CO_2$ process and/or
where the phenol-aldehyde resin possesses a weight average of the molar masses in the range from 750 to 1200 g/mol, preferably in the range from 750 to 1000 g/mol, more preferably in the range from 780 to 980 g/mol, and very preferably in the range from 850 to 980 g/mol, determined by means of gel permeation chromatography.

**6.** Aqueous alkaline binder composition according to any of the preceding claims, further comprising

- one or more compounds selected from the group consisting of polyalkylene glycols, phenylalkylene glycol ethers, propylene glycol alkyl ethers, substituted or unsubstituted pyrrolidones, monoethylene glycol and polyethylene glycol in a total amount in the range from 1 to 40 wt%, preferably in a total amount of 1 to 15 wt%, based on the total mass of the binder composition and/or
- reaction products of this or these compounds and/or
further comprising
- one or more compounds from the group consisting of C4-C20 saturated or unsaturated aliphatic carboxylic acids and alkali metal salts of said acids, in a total amount in the range from 0.1 to 5.0 wt%, preferably in a total amount of 0.5 to 3 wt%, preferably in a total amount of 0.8 to 1.5 wt%, based on the total mass of the binder

composition, preferably comprising

- one or both compounds from the group consisting of isononanoic acid and alkali metal salts of isononanoic acid, in a total amount in the range from 0.1 to 5.0 wt%, preferably in a total amount of 0.5 to 3 wt%, preferably in a total amount of 0.8 to 1.5 wt%, based on the total mass of the binder composition.

**7.** Aqueous alkaline binder composition according to any of the preceding claims, further comprising

- phenoxyethanol and/or butyldiglycol and/or monoethylene glycol in a total amount in the range from 3 to 10 wt%, preferably in the range of 3-6 wt%, based on the total mass of the binder composition
and/or
further comprising
- 1,3,5-trioxacyclohexane in a total amount in the range from 0.1 to 5%, preferably in the range from 0.5 to 1.5%.

**8.** Aqueous alkaline binder composition according to any of the preceding claims, where the pH at 20°C is in the range from 12 to 14, preferably in a range from 13 to 14.

**9.** Aqueous alkaline binder composition according to any of the preceding claims, where
the molar amount of the phenol groups in the aqueous alkaline binder composition is in the range from 1.5 to 2.5 mol/kg, preferably in the range from 1.8 to 2.0 mol/kg, based on the total mass of the binder composition
and/or
the viscosity of the alkaline binder composition at 20°C is in the range of 100-1000 mPas, preferably 150-700 mPas, more preferably 150-500 mPas, determined in accordance with DIN EN ISO 3219:1994.

**10.** Aqueous alkaline binder composition according to any of the preceding claims, where the molar ratio of a total amount of alkali metals to phenol groups is in the range from 1.0:1 to 2.5:1, preferably in the range from 1.5:1 to 2.1:1, more preferably in the range from 1.7:1 to 1.9:1
and/or
where the molar amount of the alkali metals in the aqueous alkaline binder composition is in the range from 1.0 to 7.5 mol/kg, preferably in the range from 2.0 to 6.0 mol/kg, more preferably in the range from 3.0 to 4.0 mol/kg, based on the total mass of the binder composition and/or
where the molar ratio of a total amount of potassium cations to a total amount of sodium cations is in the range from 47:1 to 59:1, preferably in the range from 50:1 to 56:1, more preferably in the range from 52:1 to 55:1.

**11.** Aqueous alkaline binder composition according to any of the preceding claims, for curing with carbon dioxide gas in the phenol-resole-$CO_2$ process, comprising

- a negatively charged or uncharged phenol-aldehyde resin, comprising phenol groups, as defined in Claim 1, where the phenol-aldehyde resin possesses a weight average of the molar masses in the range from 750 to 1200 g/mol, preferably in the range from 800 to 1100 g/mol and more preferably in the range from 850 to 1000 g/mol, determined by means of gel permeation chromatography,
- an oxyanion as defined in Claim 1, for forming a stable complex with the negatively charged or uncharged phenol-aldehyde resin,
and also
- one or more epoxysilanes, preferably selected from the group consisting of 3-glycidyloxypropyltriethoxysilane and 3-glycidyloxypropyltrimethoxysilane, in a total amount in the range from 2.5 to 10 wt%, based on the total mass of the binder composition,

where the total molar amount of the phenol groups of the phenol-aldehyde resin in the aqueous alkaline binder composition is in the range from 1.8 to 2.0 mol/kg, based on the total mass of the aqueous alkaline binder composition.

**12.** Use of an aqueous alkaline binder composition according to any of the preceding claims as a binder for a foundry moulding material, preferably in a method in which the binder is cured by gassing with carbon dioxide gas.

**13.** Moulding material mixture for producing a foundry moulding, comprising

- an aqueous alkaline binder composition according to any of the preceding Claims 1 to 11
and
- a foundry moulding material.

**14.** Method for producing a foundry moulding, having the following steps:

- producing or providing a moulding material mixture according to Claim 13,
- moulding the moulding material mixture produced or provided,
- curing the moulded moulding material mixture by gassing with carbon dioxide gas.

**15.** Foundry moulding
producible by a method according to Claim 14.

## Revendications

**1.** Composition alcaline aqueuse de liant à durcissement au dioxyde de carbone gazeux, comprenant

- une résine phénolaldéhyde chargée négativement ou non chargée, comprenant des groupes phénol, laquelle est choisie dans le groupe constitué des résols et des mélanges comprenant un ou plusieurs résols et une ou plusieurs novolaques,
- un oxyanion choisi dans le groupe constitué des ions borate, des ions aluminate, des ions stannate, des ions zirconate, des ions titanate et de leurs mélanges, pour former un complexe stable avec la résine résol-phénolaldéhyde,
et
- un ou plusieurs silanes en une quantité totale dans la plage de 2,5 à 10 % en poids par rapport à la masse totale de la composition du liant,

dans laquelle la quantité molaire totale des groupes phénol de la résine phénolaldéhyde dans la composition alcaline aqueuse de liant est comprise entre 1 et 3 mol/kg, par rapport à la masse totale de la composition alcaline aqueuse de liant.

**2.** Composition alcaline aqueuse de liant selon la revendication 1, comprenant

- un ou plusieurs silanes en une quantité totale comprise entre 3,0 et 10 % en poids, de préférence entre 3,5 et 7 % en poids, de manière particulièrement préférée entre 3,5 et 6 % en poids, par rapport à la masse totale de la composition de liant.

**3.** Composition alcaline aqueuse de liant selon l'une quelconque des revendications précédentes,
dans laquelle un ou plusieurs ou tous les silanes utilisés sont choisis dans le groupe constitué de 3-aminopropyltriéthoxysilane, N-(2-aminoéthyle)-3-aminopropyle-tri-méthoxysilane et de phényltriméthoxysilane et/ou sont choisis dans le groupe des époxysilanes,
et dans laquelle un ou plusieurs des silanes utilisés sont choisis de préférence dans le groupe constitué de 3-(glycidyloxy)propyle-triéthoxysilane et 3-(glycidyloxy)propyle-triméthoxysilane.

**4.** Composition alcaline aqueuse de liant selon la revendication 3, comprenant en tant que silanes

- des époxysilanes, de préférence choisis dans le groupe constitué de 3-(glycidyloxy)propyle-triéthoxysilane et 3-(glycidyloxy)propyle-triméthoxysilane, en une quantité totale comprise entre 2,5 et 7 % en poids, de manière particulièrement préférée de 4 à 6 % en poids, par rapport à la masse totale de la composition de liant.

**5.** Composition alcaline aqueuse de liant selon l'une quelconque des revendications précédentes, dans laquelle la résine phénolaldéhyde chargée négativement ou non chargée est une résine phénolaldéhyde à base de résol chargée négativement ou non chargée, pour le durcissement avec du dioxyde de carbone gazeux dans le procédé à base de CO2-résol-phénol et/ou
dans laquelle la résine phénolaldéhyde possède masse molaire moyenne comprise entre 750 et 1200 g/mol, de préférence entre 750 et 1000 g/mol, de manière particulièrement préférée entre 780 et 980 g/mol et de manière très particulièrement préférée entre 850 et 980 g/mol, définie au moyen d'une chromatographie par perméation de gel.

**6.** Composition alcaline aqueuse de liant selon l'une quelconque des revendications précédentes, comprenant de plus

- un ou plusieurs composés choisis dans le groupe constitué de polyalkylèneglycols, d'éther de phénylalkylène

glycol, d'éther alkylique de propylène glycol, de pyrrolidones substituées ou non substituées, de monoéthylène glycol et de polyéthylène glycol, en une quantité totale comprise entre 1 et 40 % en poids, de préférence en une quantité totale de 1 à 15 % en poids, par rapport à la masse totale de la composition de liant et/ou
- des produits de réaction dudit composé ou desdits composés et/ou
comprenant de plus
- un ou plusieurs composés choisis dans le groupe constitué des acides carboniques aliphatiques saturés ou insaturés en C4-C20 et des sels alcalins desdits acides, en une quantité totale comprise entre 0,1 et 5,0 % en poids, de préférence en une quantité totale de 0,5 à 3 % en poids, de préférence en une quantité totale de 0,8 à 1,5 % en poids, par rapport à la masse totale de la composition de liant, comprenant de préférence
- un ou deux composés choisis dans le groupe constitué de l'acide isononanoïque et des sels alcalins de l'acide isononanoïque, en une quantité totale comprise entre 0,1 à 5,0 % en poids, de préférence en une quantité totale de 0,5 à 3 % en poids, de préférence en une quantité totale de 0,8 à 1,5 % en poids, par rapport à la masse totale de la composition de liant.

**7.** Composition alcaline aqueuse de liant selon l'une quelconque des revendications précédentes, comprenant de plus

- du phénoxyéthanol et/ou du butyldiglycol et/ou du monoéthylèneglycol en une quantité totale comprise entre 3 et 10 % en poids, de manière préférée entre 3 et 6 % en poids, par rapport à la masse totale de la composition de liant et/ou
- du 1,3,5-trioxacyclohexane en une quantité totale dans la plage de 0,1 à 5 %, de préférence dans la plage de 0,5 à 1,5 %.

**8.** Composition alcaline aqueuse de liant selon l'une quelconque des revendications précédentes, dans laquelle la valeur pH à 20 °C est comprise entre 12 et 14, de manière préférée entre 13 et 14.

**9.** Composition alcaline aqueuse de liant selon l'une quelconque des revendications précédentes, dans laquelle
la quantité molaire des groupes phénol dans la composition alcaline aqueuse de liant est comprise entre 1,5 et 2,5 mol/kg, de préférence entre 1,8 à 2,0 mol/kg, par rapport à la masse totale de la composition de liant,
et/ou
la viscosité de la composition alcaline de liant à 20 °C est comprise entre 100 et 1000 mPas, de préférence entre 150 et 700 mPas, de manière particulièrement préférée entre 150 et 500 mPas, définie selon la norme DIN EN ISO 3219:1994.

**10.** Composition alcaline aqueuse de liant selon l'une quelconque des revendications précédentes, dans laquelle le rapport molaire d'une quantité totale de métaux alcalins par rapport aux groupes phénol se situe dans la plage de 1,0:1 à 2,5:1, de manière préférée dans la plage de 1,5:1 à 2,1:1, de manière particulièrement préférée dans la plage de 1,7:1 à 1,9:1,
et/ou
dans laquelle la quantité molaire des métaux alcalins dans la composition alcaline aqueuse de liant est comprise entre 1,0 et 7,5 mol/kg, de manière préférée entre 2,0 et 6,0 mol/kg, de manière particulièrement préférée entre 3,0 et 4,0 mol/kg, par rapport à la masse totale de la composition de liant et/ou
dans laquelle le rapport molaire de la quantité totale de cations de potassium par rapport à la quantité totale de cations de sodium se situe dans la plage de 47:1 à 59:1, de manière préférée dans la plage de 50:1 à 56:1, de manière particulièrement préférée dans la plage de 52:1 à 55:1.

**11.** Composition alcaline aqueuse de liant selon l'une quelconque des revendications précédentes, pour le durcissement avec du dioxyde de carbone gazeux dans le procédé à base de CO2-résol-phénol, comprenant

- une résine phénolaldéhyde chargée négativement ou non chargée, comprenant des groupes phénol telle que définie dans la revendication 1,
dans laquelle la résine phénolaldéhyde possède une masse molaire moyenne comprise entre 750 et 1200 g/mol, de préférence entre 800 et 1100 g/mol, et de manière particulièrement préférée entre 850 et 1000 g/mol, définie au moyen d'une chromatographie par perméation de gel,
- un oxyanion tel que défini dans la revendication 1 pour former un complexe stable avec la résine phénolaldéhyde chargée négativement ou non chargée, et
- un ou plusieurs époxysilanes, de préférence choisis dans le groupe constitué de 3-glycidyloxy-propyle-triéthoxysilane et 3-glycidyloxy-propyle-triméthoxysilane, en une quantité totale comprise entre 2,5 et 10 % en poids, par rapport à la masse totale de la composition de liant,

dans lequel la quantité totale molaire des groupes phénol de la résine phénolaldéhyde dans la composition alcaline aqueuse de liant est comprise entre 1,8 et 2,0 mol/kg, par rapport à la masse totale de la composition alcaline aqueuse de liant.

**12.** Utilisation d'une composition alcaline aqueuse de liant selon l'une quelconque des revendications précédentes, en tant que liant pour une matière à mouler de fonderie, de préférence dans un procédé dans lequel le liant est durci par gazéification avec du dioxyde de carbone gazeux.

**13.** Mélange de matières à mouler pour fabriquer un corps moulé de fonderie, comprenant

- une composition alcaline aqueuse de liant selon l'une quelconque des revendications 1 à 11
et
- une matière à mouler de fonderie.

**14.** Procédé pour la fabrication d'un corps moulé de fonderie, comprenant les étapes suivantes :

- une étape de fabrication ou de fourniture d'un mélange de matières à mouler selon la revendication 13,
- une étape de moulage du mélange de matières à mouler fabriqué ou fourni,
- une étape de durcissement du mélange de matières à mouler moulé par gazéification avec du dioxyde de carbone gazeux.

**15.** Corps moulé de fonderie, pouvant être fabriqué par un procédé selon la revendication 14.

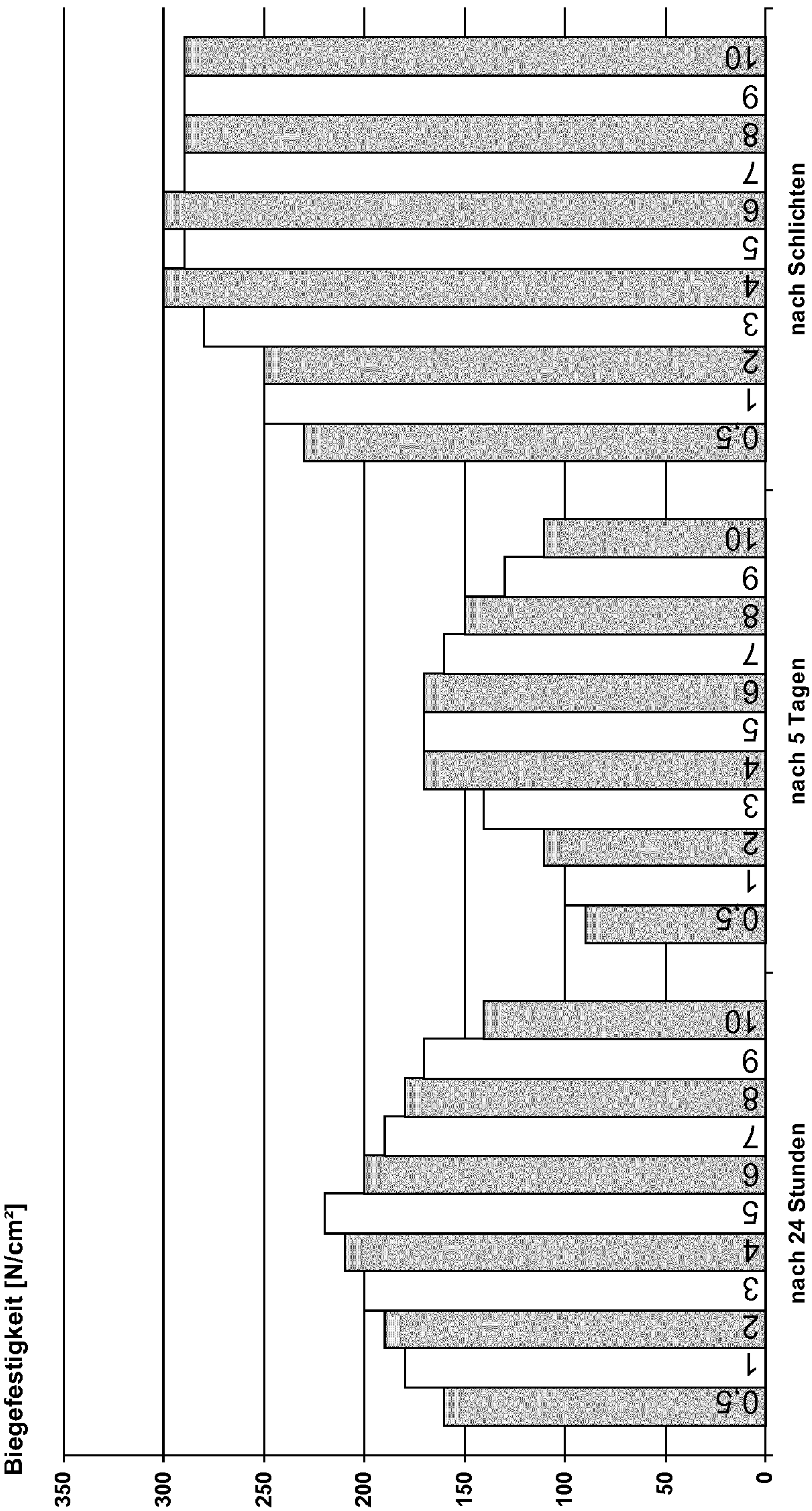
Biegefestigkeit [N/cm²]
0
50
100
150
200
250
300
350
nach 24 Stunden
nach 5 Tagen
nach Schlichten
0.5
1
2
3
4
5
6
7
8
9
10

Figur 1

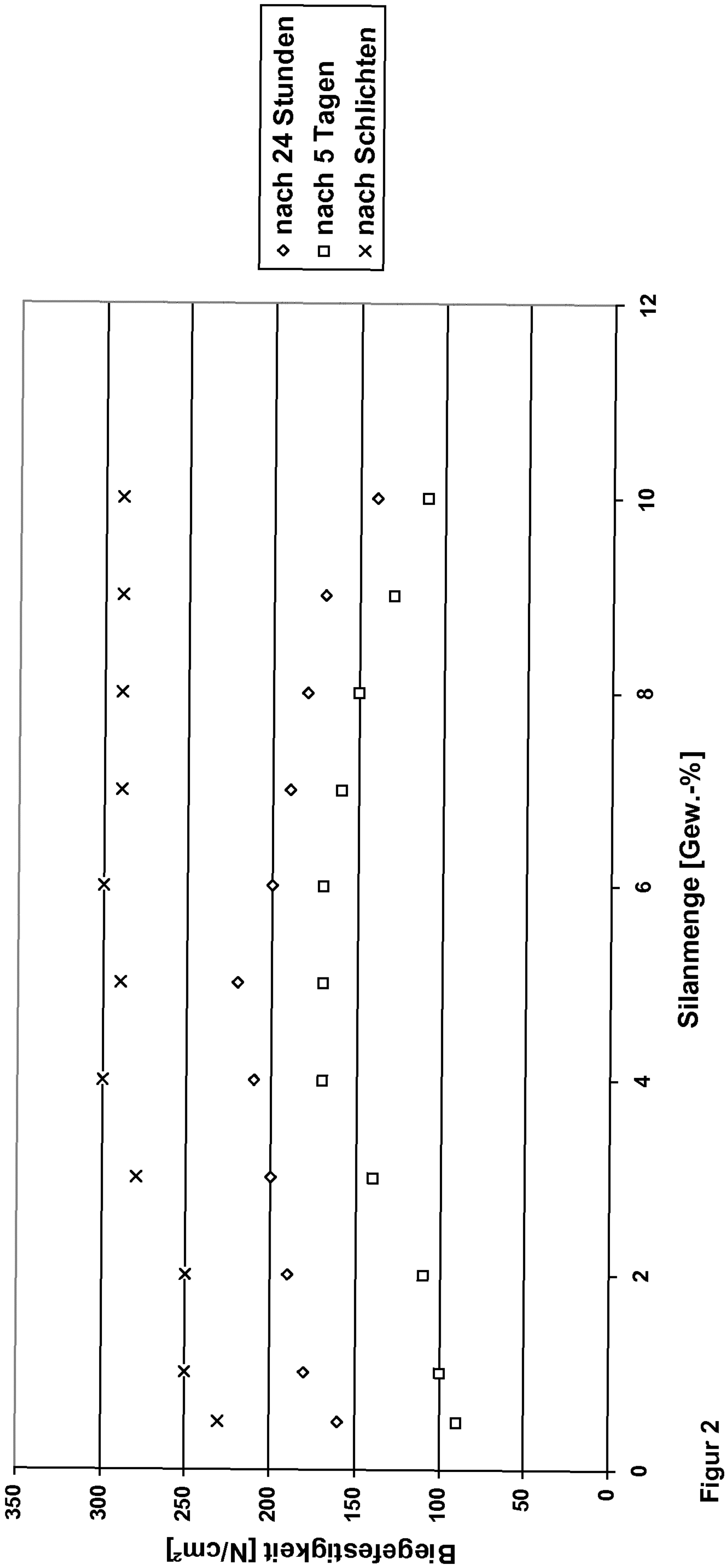
nach 24 Stunden
nach 5 Tagen
nach Schlichten
Biegefestigkeit [N/cm²]
350
300
250
200
150
100
50
0
0
2
4
6
8
10
12
Silanmenge [Gew.-%]

Figur 2

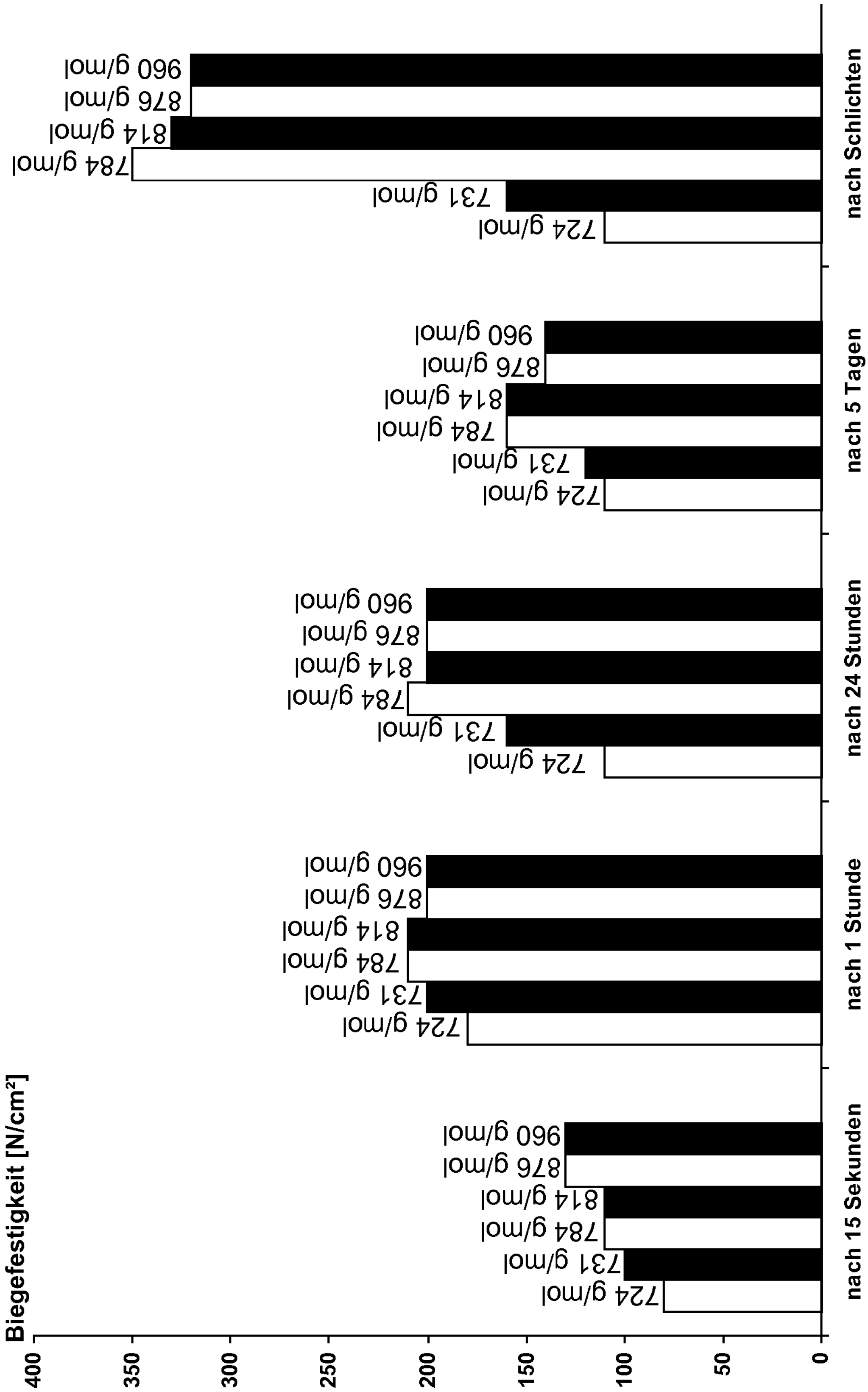
Biegefestigkeit [N/cm²]
0
50
100
150
200
250
300
350
400
nach 15 Sekunden
nach 1 Stunde
nach 24 Stunden
nach 5 Tagen
nach Schlichten
724 g/mol
731 g/mol
784 g/mol
814 g/mol
876 g/mol
960 g/mol

Figur 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102005024334 A1
- EP 0363385 B1
- WO 03016400 A1
- EP 0323096 B1
- WO 9718913 A
- US 5242957 A
- US 5198478 A
- WO 0112709 A1
- US 5294648 A
- EP 2052798 A1
- EP 0503758 B1
- US 4977209 A
- GB 2253627 A
- US 5162393 A
- US 4985489 A
- EP 2052798 B1
- EP 0508566 B1
- EP 0503759 B1
- EP 0556955 B1
- JP 2000024751 A
- GB 886854 A
- US 4474904 A